# EUROPÄISCHE PATENTSCHRIFT

(11) **EP 2 189 485 B1**
(45) Veröffentlichungstag und Bekanntmachung des Hinweises auf die Patenterteilung: **16.02.2011**
(21) Anmeldenummer: 08168092.8
(22) Anmeldetag: 31.10.2008
(51) Int. Cl.: C08G 18/12, C09J 175/00

(54) **Alpha-Silan enthaltende Polyurethanzusammensetzung mit anisotropen Materialeigenschaften**
Polyurethane composition comprising alpha-silane having anisostropic material properties
Composition de polyuréthane contenant alpha-silane présentant des propriétés de matériaux anisotropes

(43) Veröffentlichungstag der Anmeldung: 26.05.2010
(73) Patentinhaber: Sika Technology AG, 6340 Baar (CH)
(72) Erfinder: Burckhardt, Urs, 8049, Zürich (CH)
(74) Vertreter: Sika Patent Attorneys

(56) Entgegenhaltungen:
- WO-A-2007/104761
- WO-A-2008/116902

## Beschreibung

### Technisches Gebiet

Die vorliegende Erfindung betrifft das Gebiet der einkomponentigen feuchtigkeitshärtenden Polyurethanzusammensetzungen, sowie deren Verwendungen, insbesondere als Dichtstoffe.

### Stand der Technik

Einkomponentige, feuchtigkeitshärtende Polyurethanzusammensetzungen werden seit langem als Klebstoffe, Dichtstoffe und Beschichtungen eingesetzt. Für die Anwendung als Dichtstoffe für Bewegungsfugen an Bauwerken werden Zusammensetzungen benötigt, welche blasenfrei aushärten und nach ihrer Aushärtung in einem breiten Temperaturbereich weichelastisch sind, das heisst im tiefen Dehnungsbereich über möglichst niedrige Werte für die Dehnspannung verfügen und gleichzeitig ein hohes Rückstellvermögen aufweisen. Dadurch sind solche Dichtstoffe in der Lage, die durch Bewegungen oder Temperaturunterschiede induzierte Ausdehnung bzw. Kompression der Fuge reversibel und mit geringer Kraftübertragung auf die Fugensubstrate zu überbrücken und diese somit möglichst wenig zu belasten bzw. zu schädigen.

Aus WO 2007/104761 A1 sind einkomponentige Polyurethanzusammensetzungen enthaltend langkettige Polyaldimine bekannt, welche sich als weichelastische Dichtstoffe eignen. Die beschriebenen Zusammensetzungen härten blasenfrei aus und weisen sowohl bei Raumtemperatur als auch bei - 20 °C niedrige Werte für die 100%-Dehnspannung auf. Wie andere weichelastisch eingestellte Polyurethanzusammensetzungen auch, neigen sie aber dazu, beim Aushärten eine mehr oder weniger stark klebrige Oberfläche auszubilden, welche leicht verschmutzt. Bewegungsfugen im Aussenbereich von Bauwerken sind für den Betrachter meist gut sichtbar und farblich auf die Fassade des Gebäudes abgestimmt. Sie weisen zudem oft einen hellen Farbton wie weiss, hellgrau oder betongrau auf; ihre Verschmutzung ist somit schnell sichtbar und deshalb störend.

Aus WO 2008/116900 A1 und WO 2008/116902 A1 sind einkomponentige Polyurethanzusammensetzungen enthaltend spezielle Polyaldimine bekannt, welche sich als Dichtstoffe mit geringer Verschmutzungsneigung eignen. Die beschriebenen Zusammensetzungen weisen nach der Aushärtung eine geringe Oberflächenklebrigkeit auf, zeigen aber keine anisotropen Materialeigenschaften.

Aus WO 2006/130592 A1 sind Polyurethanzusammensetzungen bekannt, welche mindestens ein Isocyanatgruppen aufweisendes Polyurethanprepolymer, mindestens einen Katalysator, welcher die Reaktion der NCO-Gruppen mit Wasser beschleunigt und mindestens eine Verbindung enthaltend mindestens eine α-Silangruppe enthalten, und welche geeignet sind als Klebstoffe für das Einkleben von Autoscheiben. Die beschriebenen Zusammensetzungen zeigen aber keine anisotropen Materialeigenschaften.

### Darstellung der Erfindung

Aufgabe der vorliegenden Erfindung ist es daher, einkomponentige feuchtigkeitshärtende Polyurethanzusammensetzungen zur Verfügung zu stellen, welche blasenfrei aushärten und nach der Aushärtung eine weitgehend klebfreie Oberfläche aufweisen sowie über tiefe Werte für die 100%-Dehnspannung und ein gutes Rückstellvermögen verfügen.

Überraschenderweise lässt sich diese Aufgabe mittels einer in Anspruch 1 offenbarten Zusammensetzung lösen. Die Zusammensetzung härtet mittels Feuchtigkeit weitestgehend blasenfrei aus. Bei der Aushärtung der Zusammensetzung mittels Luftfeuchtigkeit entsteht ein anisotropes Material mit einem vorwiegend elastischen, an der Oberfläche praktisch klebfreien Mantel ("Haut") und einem vorwiegend plastischen Kern. Zusammensetzung mittels einer genügend grossen Menge von im Wesentlichen homogen eingemischtem Wasser entsteht hingegen ein weitgehend isotropes Material. Die Zusammensetzung lässt sich bezüglich ihrer mechanischen Eigenschaften in einem weiten Bereich variieren. Sie eignet sich insbesondere als weichelastischer Dichtstoff für Bau- und Industrieanwendungen, beispielsweise für Bewegungsfugen an Bauwerken oder Abdichtungen in Automobilen. Sie kann aber auch als vibrationsdämpfender Kleb- oder Dichtstoff oder als schlag- und/oder vibrationsdämpfende Beschichtung eingesetzt werden. Bei ihrer Anwendung als Dichtstoff für Fugen entsteht nach der Aushärtung eine Fuge mittels Luftfeuchtigkeit mit einer klebfreien, widerstandsfähigen Oberfläche, welche als Ganzes in einem breiten Temperaturbereich ausgeprägt weichelastische Eigenschaften und ein gutes Rückstellvermögen aufweist und wenig anfällig für Verschmutzungen ist.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine einkomponentige feuchtigkeitshärtende Zusammensetzung umfassend
a) mindestens ein Polyisocyanat **P**,
b) mindestens ein Aldimin **A** der Formel (I), 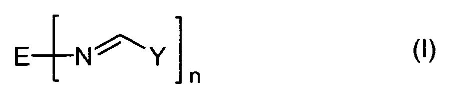 wobei
   n für 2 oder 3 oder 4 steht,
   E für den organischen Rest eines n-wertigen Amins **B** nach Entfernung von n primären Aminogruppen steht, und
   Y für einen einwertigen Kohlenwasserstoffrest mit 1 bis 35 C-Atomen, der gegebenenfalls mindestens ein Heteroatom enthält, steht,
c) mindestens ein Organoalkoxysilan **OS,** welches mindestens eine Gruppierung der Formel (VI) aufweist, 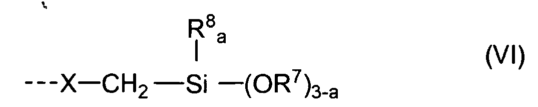 wobei
   a für 0 oder 1 oder 2, bevorzugt für 0 oder 1, steht,
   R⁷ für einen Alkylrest mit 1 bis 5 C-Atomen, insbesondere für einen Methyl- oder Ethylrest, steht,
   R⁸ für einen Alkylrest mit 1 bis 8 C-Atomen, insbesondere für einen Methylrest, steht, und
   X für ein Sauerstoffatom oder für ein substituiertes Stickstoffatom steht,
d) mindestens eine Säure **S;**
   mit den Massgaben, dass in der Zusammensetzung
   (i) das Verhältnis **V1** zwischen der Anzahl Aldiminogruppen und der Anzahl Isocyanatgruppen im Bereich von 0.2 bis 0.8 liegt, und dass
   (ii) das Verhältnis **V2** zwischen der Anzahl Alkoxygruppen des Organoalkoxysilans **OS** und der Anzahl Isocyanatgruppen im Bereich von 0.1 bis 0.5 liegt.

Gestrichelte Linien in den Formeln in diesem Dokument stellen jeweils die Bindung zwischen einem Substituenten und dem zugehörigen Molekülrest dar.

Mit "Poly" beginnende Substanznamen wie Polyol, Polyisocyanat oder Polyaldehyd bezeichnen im vorliegenden Dokument Substanzen, die formal zwei oder mehr der in ihrem Namen vorkommenden funktionellen Gruppen pro Molekül enthalten.

Der Begriff "Polyisocyanat" umfasst im vorliegenden Dokument Verbindungen mit zwei oder mehr Isocyanatgruppen, unabhängig davon, ob es sich dabei um monomere Diisocyanate, oligomere Polyisocyanate oder Isocyanatgruppen aufweisende Polymere mit einem relativ hohen Molekulargewicht handelt.

Mit dem Begriff "Organoalkoxysilan" wird im vorliegenden Dokument eine Silicium-haltige Verbindung bezeichnet, in der das Silicium-Atom sowohl mindestens einen, insbesondere zwei oder drei, Alkoxygruppen als auch mindestens einen direkt gebundenen organischen Rest trägt und somit mindestens eine Si-C-Bindung aufweist. Entsprechend dazu bezeichnet der Begriff "Silangruppe" die an den organischen Rest des Organoalkoxysilans gebundene Silicium-haltige Gruppe. Organoalkoxysilane, beziehungsweise deren Silangruppen, haben die Eigenschaft, bei Kontakt mit Feuchtigkeit zu hydrolysieren und dabei einen Alkohol, insbesondere Methanol oder Ethanol, freizusetzen.

Der Begriff "Dehnspannung" bezeichnet die Spannung, welche in einem Material im gedehnten Zustand wirkt. Der Begriff "100%-Dehnspannung" bezeichnet die Spannung, welche in einem Material wirkt, welches auf seine doppelte Länge gedehnt ist.

Als Polyisocyanat **P** geeignet ist in einer Ausführungsform ein Isocyanatgruppen aufweisendes Polyurethanpolymer **PUP**.

Der Begriff "Polyurethanpolymer" umfasst sämtliche Polymere, welche nach dem sogenannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyhamstoffe, Polyhamstoffe, Polyester-Polyharnstoffe, Polyisocyanurate und Polycarbodiimide.

Ein geeignetes Polyurethanpolymer **PUP** ist insbesondere erhältlich aus der Umsetzung von mindestens einem Polyol mit mindestens einem Polyisocyanat. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Vorteilhaft ist das Polyisocyanat so dosiert, dass ein NCO/OH-Verhältnis von 1.3 bis 5, insbesondere eines von 1.5 bis 3, eingehalten wird. Unter dem "NCO/OH-Verhältnis" wird das Verhältnis der Anzahl der eingesetzten Isocyanatgruppen zu der Anzahl der eingesetzten Hydroxylgruppen verstanden. Bevorzugt verbleibt im Polyurethanpolymer **PUP** nach der Umsetzung aller Hydroxylgruppen des Polyols ein Gehalt an freien Isocyanatgruppen von 0.5 bis 15 Gewichts-%, besonders bevorzugt von 0.5 bis 5 Gewichts-%.

Gegebenenfalls kann das Polyurethanpolymer **PUP** unter Mitverwendung von Weichmachern hergestellt werden, wobei die verwendeten Weichmacher keine gegenüber Isocyanaten reaktive Gruppen enthalten.

Als Polyole für die Herstellung eines Polyurethanpolymers **PUP** können beispielsweise die folgenden handelsüblichen Polyole oder Mischungen davon eingesetzt werden:
- Polyoxyalkylenpolyole, auch Polyetherpolyole oder Oligoetherole genannt, welche Polymerisationsprodukte von Ethylenoxid, 1,2-Propylenoxid, 1,2-oder 2,3-Butylenoxid, Oxetan, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.
   Besonders geeignet sind Polyoxyalkylendiole oder Polyoxyalkylentriole, insbesondere Polyoxyethylen- und Polyoxypropylendi- und -triole.
   Speziell geeignet sind Polyoxyalkylendiole und -triole mit einem Ungesättigtheitsgrad tiefer als 0.02 mEq/g und mit einem Molekulargewicht im Bereich von 1'000 - 30'000 g/mol, sowie Polyoxypropylendiole und -triole mit einem Molekulargewicht von 400 - 8'000 g/mol.
   Ebenfalls besonders geeignet sind sogenannte Ethylenoxid-terminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und
   dadurch primäre Hydroxylgruppen aufweisen.
- Styrol-Acrylnitril- oder Acrylnitril-Methylmethacrylat-gepfropfte Polyetherpolyole.
- Polyesterpolyole, auch Oligoesterole genannt, hergestellt nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen.

Als Polyesterpolyole insbesondere geeignet sind solche, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid, oder Mischungen der vorgenannten Säuren, sowie Polyesterpolyole aus Lactonen wie beispielsweise aus ε-Caprolacton und Startern wie den vorgenannten zwei- oder dreiwertigen Alkoholen.

Besonders geeignete Polyesterpolyole sind Polyesterdiole.
- Polycarbonatpolyoie, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.
- Polyacrylat- und Polymethacrylatpolyole.
- Polyhydroxyfunktionelle Fette und Öle, beispielsweise natürliche Fette und Öle, inbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
- Polykohlenwasserstoffpolyole, auch Oligohydrocarbonole genannt, wie beispielsweise polyhydroxyfunktionelle Polyolefine, Polyisobutylene, Polyisoprene; polyhydroxyfunktionelle Ethylen-Propylen-, Ethylen-Butylen- oder Ethylen-Propylen-Dien-Copolymere, wie sie beispielsweise von der Firma Kraton Polymers hergestellt werden; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen und Isopren, beispielsweise polyhydroxyfunktionelle Acrylonitril/Butadien-Copolymere, wie sie beispielsweise aus Epoxiden oder Aminoalkoholen und carboxylterminierten Acrylonitril/Butadien-Copolymeren (beispielsweise kommerziell erhältlich unter dem Namen Hypro^{®} (früher Hycar^{®}) CTBN und CTBNX und ETBN von Nanoresins AG, Deutschland, bzw. Emerald Performance Materials LLC) hergestellt werden können; sowie hydrierte polyhydroxyfunktionelle Polymere oder Copolymere von Dienen.

Diese genannten Polyole weisen bevorzugt ein mittleres Molekulargewicht von 250 - 30'000 g/mol, insbesondere von 400 - 20'000 g/mol, und weisen bevorzugt eine mittlere OH-Funktionalität im Bereich von 1.6 bis 3 auf.

Als Polyole bevorzugt sind Polyether-, Polyester-, Polycarbonat- und Polyacrylatpolyole, bevorzugt Di- und Triole. Besonders bevorzugt sind Polyetherpolyole, insbesondere Polyoxypropylen- und Polyoxypropylenpolyoxyethylenpolyole, sowie flüssige Polyesterpolyole und Polyetherpolyesterpolyole.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des Polyurethanpolymers **PUP** mitverwendet werden. Ebenso können kleine Mengen an Polyolen mit einer mittleren OH-Funktionalität von mehr als 3 mitverwendet werden, beispielsweise Zuckerpolyole.

Als Polyisocyanat für die Herstellung eines Isocyanatgruppen aufweisenden Polyurethanpolymers **PUP** werden aromatische oder aliphatische Polyisocyanate, insbesondere aromatische oder aliphatische Diisocyanate, eingesetzt.

Als "aromatisches Isocyanat" wird eine organische Verbindung bezeichnet, welche ausschliesslich aromatische Isocyanatgruppen aufweist. Als "aromatisch" wird eine Isocyanatgruppe bezeichnet, die an einen aromatischen oder heteroaromatischen Rest gebunden ist. Als "aliphatisches Isocyanat" wird eine organische Verbindung bezeichnet, die aliphatische Isocyanatgruppen enthält. Als "aliphatisch" wird eine Isocyanatgruppe bezeichnet, die an einen aliphatischen, cycloaliphatischen oder arylaliphatischen Rest gebunden ist.

Als aromatische Polyisocyanate eignen sich insbesondere monomere Di- oder Triisocyanate wie 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), Gemische aus MDI und MDI-Homologen (polymeres MDI oder PMDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), 1,3,5-Tris-(isocyanatomethyl)-benzol, Tris-(4-isocyanatophenyl)-methan, Tris-(4-isocyanatophenyl)-thiophosphat, Oligomere und Polymere der vorgenannten Isocyanate, sowie beliebige Mischungen der vorgenannten Isocyanate. Bevorzugt sind MDI und TDI.

Als aliphatische Polyisocyanate eignen sich insbesondere monomere Di- oder Triisocyanate wie 1,4-Tetramethylendiisocyanat, 2-Methylpentamethylen-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)-naphthalin, Dimer- und Trimerfettsäureisocyanate wie 3,6-Bis-(9-isocyanatononyl)-4,5-di-(1-heptenyl)-cyclohexen (Dimeryldiisocyanat), α,α,α',α',α",α"-Hexamethyl-1,3,5-mesitylentriisocyanat, Oligomere und Polymere der vorgenannten Isocyanate, sowie beliebige Mischungen der vorgenannten Isocyanate. Bevorzugt sind HDI und IPDI.

Bevorzugt sind Polyurethanpolymere **PUP** mit aromatischen Isocyanat-gruppen.

Als Polyisocyanat **P** geeignet ist in einer weiteren Ausführungsform ein Polyisocyanat **PI** in der Form eines monomeren Di- oder Triisocyanates oder eines Oligomeren eines monomeren Diisocyanates oder eines Derivates eines monomeren Diisocyanates, wobei als monomeres Di- oder Triisocyanat insbesondere die vorgenannten aromatischen und aliphatischen Di- und Triisocyanate geeignet sind.

Als Polyisocyanat **PI** besonders geeignet sind Oligomere oder Derivate von monomeren Diisocyanaten, insbesondere von HDI, IPDI, TDI und MDI. Kommerziell erhältliche Typen sind insbesondere HDI-Biurete, beispielsweise als Desmodur^{®} N 100 und N 3200 (von Bayer), Tolonate^{®} HDB und HDB-LV (von Rhodia) und Duranate^{®} 24A-100 (von Asahi Kasei); HDI-Isocyanurate, beispielsweise als Desmodur^{®} N 3300, N 3600 und N 3790 BA (alle von Bayer), Tolonate^{®} HDT, HDT-LV und HDT-LV2 (von Rhodia), Duranate^{®} TPA-100 und THA-100 (von Asahi Kasei) und Coronate^{®} HX (von Nippon Polyurethane); HDI-Uretdione, beispielsweise als Desmodur^{®} N 3400 (von Bayer); HDI-Iminooxadiazindione, beispielsweise als Desmodur^{®} XP 2410 (von Bayer); HDI-Allophanate, beispielsweise als Desmodur^{®} VP LS 2102 (von Bayer); IPDI-Isocyanurate, beispielsweise in Lösung als Desmodur^{®} Z 4470 (von Bayer) oder in fester Form als Vestanat^{®} T1890/100 (von Degussa); TDI-Oligomere, beispielsweise als Desmodur^{®} IL (von Bayer); sowie gemischte Isocyanurate auf Basis TDI / HDI, zum Beispiel als Desmodur^{®} HL (von Bayer). Weiterhin besonders geeeignet sind bei Raumtemperatur flüssige Formen von MDI (sogenanntes "modifiziertes MDI"), welche Gemische von MDI mit MDI-Derivaten, wie beispielsweise MDI-Carbodiimiden bzw. MDI-Uretoniminen oder MDI-Urethanen darstellen, bekannt beispielsweise unter Handelsnamen wie Desmodur^{®} CD, Desmodur^{®} PF, Desmodur^{®} PC (alle von Bayer), sowie Gemische aus MDI und MDI-Homologen (polymeres MDI oder PMDI), erhältlich unter Handelsnamen wie Desmodur^{®} VL, Desmodur^{®} VL50, Desmodur^{®} VL R10, Desmodur^{®} VL R20 und Desmodur^{®} VKS 20F (alle von Bayer), Isonate^{®} M 309, Voranate^{®} M 229 und Voranate^{®} M 580 (alle von Dow) oder Lupranat^{®} M 10 R (von BASF).

Die vorgenannten oligomeren Polyisocyanate **PI** stellen in der Praxis üblicherweise Gemische von Substanzen mit unterschiedlichen Oligomerisationsgraden und/oder chemischen Strukturen dar. Vorzugsweise weisen sie eine mittlere NCO-Funktionalität von 2.1 bis 4.0 auf und enthalten insbesondere Isocyanurat-, Iminooxadiazindion-, Uretdion-, Urethan-, Biuret-, Allophanat-, Carbodiimid-, Uretonimin- oder Oxadiazintrion-Gruppen. Bevorzugt weisen diese Oligomere einen niedrigen Gehalt an monomeren Diisocyanaten auf.

Als Polyisocyanat **PI** bevorzugt sind bei Raumtemperatur flüssige Formen von MDI, sowie die Oligomeren von HDI, IPDI und TDI, insbesondere die Isocyanurate und die Biurete.

In einer weiteren Ausführungsform ist das Polyisocyanat **P** eine Mischung bestehend aus mindestens einem Polyurethanpolymer **PUP** und mindestens einem Polyisocyanat **PI,** wie sie vorgängig beschrieben wurden.

Bevorzugt ist das Polyisocyanat **P** ein aromatische Isocyanatgruppen aufweisendes Polyurethanpolymer **PUP.**

Üblicherweise ist das Polyisocyanat **P** in einer Menge von 5 bis 95 Gewichts-%, bevorzugt in einer Menge von 10 bis 90 Gewichts-%, bezogen auf die gesamte Zusammensetzung, vorhanden. In gefüllten Zusammensetzungen, d.h. Zusammensetzungen, welche einen Füllstoff enthalten, ist das Polyisocyanat **P** bevorzugt in einer Menge von 5 bis 60 Gewichts-%, insbesondere 10 bis 50 Gewichts-%, bezogen auf die gesamte Zusammensetzung, vorhanden.

Die einkomponentige feuchtigkeitshärtende Zusammensetzung umfasst weiterhin mindestens ein Aldimin **A** der Formel (I).

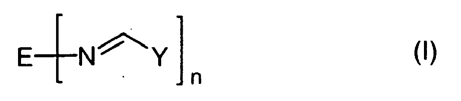

Ein bevorzugtes Aldimin **A** der Formel (I) ist ein Aldimin **A1** der Formel (Ia) oder (Ib), 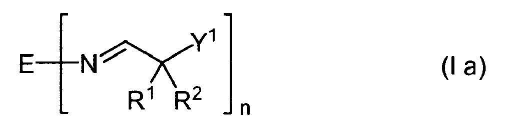 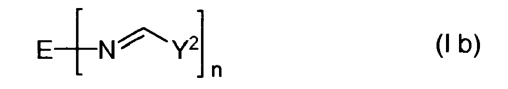 wobei
R¹ und R² entweder
   unabhängig voneinander jeweils für einen einwertigen Kohlenwasserstoffrest mit 1 bis 12 C-Atomen stehen, oder zusammen für einen zweiwertigen Kohlenwasserstoffrest mit 4 bis 12 C-Atomen, der Teil eines, gegebenenfalls substituierten, carbocyclischen Rings mit 5 bis 8, bevorzugt 6, C-Atomen ist, stehen;
Y¹ für einen einwertigen Kohlenwasserstoffrest mit 1 bis 32 C-Atomen steht, welcher gegebenenfalls mindestens ein Heteroatom, insbesondere Sauerstoff in der Form von Ether-, Carbonyl- oder Ester-Gruppen aufweist;
Y² entweder
   für einen substituierten oder unsubstituierten Aryl- oder Heteroaryl-Rest, welcher eine Ringgrösse von 5 bis 8, bevorzugt 6, Atomen aufweist, steht, oder für 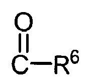 steht,
   wobei R⁶ für ein Wasserstoffatom oder für einen Alkoxyrest steht, oder für einen substituierten oder unsubstituierten Alkenyl- oder Arylalkenylrest mit mindestens 6 C-Atomen steht;
und E und n die bereits erwähnten Bedeutungen aufweisen.

Bevorzugt stehen R¹ und R² jeweils für einen Methylrest.

Weiterhin bevorzugt steht Y¹ für einen Rest der Formel (II) oder (III), 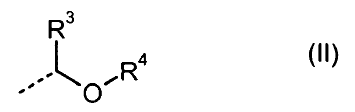 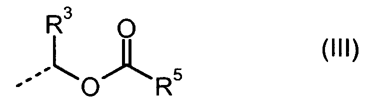 wobei
R³ für ein Wasserstoffatom oder für einen Alkyl-, Cycloalkyl-, Arylalkylrest oder einen Alkoxycarbonylrest mit 1 bis 12 C-Atomen steht;
R⁴ für einen Kohlenwasserstoffrest mit 1 bis 30 C-Atomen, welcher gegebenenfalls Ethersauerstoffatome enthält, steht;
R⁵ entweder
   für ein Wasserstoffatom steht,
   oder für einen linearen oder verzweigten Alkylrest mit 1 bis 30 C-Atomen, gegebenenfalls mit cyclischen Anteilen und gegebenenfalls mit mindestens einem Heteroatom, insbesondere Sauerstoff in der Form von Ether-, Carbonyl- oder Ester-Gruppen, steht,
   oder für einen einfach oder mehrfach ungesättigten, linearen oder verzweigten Kohlenwasserstoffrest mit 5 bis 30 C-Atomen steht,
   oder für einen, gegebenenfalls substituierten, aromatischen oder heteroaromatischen 5- oder 6-gliedrigen Ring steht.

Bevorzugt steht R³ für ein Wasserstoffatom.

Bevorzugt steht R⁴ für einen Kohlenwasserstoffrest mit 6 bis 30, insbesondere mit 11 bis 30, C-Atomen, welcher gegebenenfalls Ethersauerstoffatome enthält.

Bevorzugt steht R⁵ für einen linearen oder verzweigten Alkylrest mit 6 bis 30, insbesondere mit 11 bis 30, C-Atomen, gegebenenfalls mit cyclischen Anteilen und gegebenenfalls mit mindestens einem Heteroatom, oder für einen einfach oder mehrfach ungesättigten, linearen oder verzweigten Kohlenwasserstoffrest mit 6 bis 30, insbesondere mit 11 bis 30, C-Atomen.

Am meisten bevorzugt steht R⁵ für einen C₁₁-Alkylrest.

Am meisten bevorzugt als Aldimin **A** sind Aldimine **A1** der Formel (I a), bei welchen Y¹ für einen Rest der Formel (III) steht.

Ein Aldimin **A** ist erhältlich durch eine Kondensationsreaktion unter Abspaltung von Wasser zwischen mindestens einem Amin **B** der Formel (IV) und mindestens einem Aldehyd **ALD** der Formel (V). Der Aldehyd **ALD** wird hierbei in Bezug auf die Aminogruppen des Amins **B** stöchiometrisch oder in stöchiometrischem Überschuss eingesetzt.

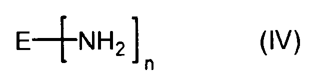

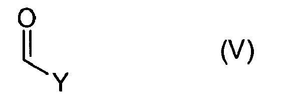

In den Formeln (IV) und (V) weisen E, n und Y die bereits erwähnten Bedeutungen auf.

Als Amin **B** geeignet sind in einer Ausführungsform Polyamine mit mindestens zwei primären aliphatischen Aminogruppen, wie insbesondere
- aliphatische, cycloaliphatische oder arylaliphatische Diamine, beispielsweise Ethylendiamin, 1,2-Propandiamin, 1,3-Propandiamin, 2-Methyl-1,2-propandiamin, 2,2-Dimethyl-1,3-propandiamin, 1,3-Butandiamin, 1,4-Butandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2,4- und 2,4,4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3-und 1,4-Diaminocyclohexan, Bis-(4-aminocyclohexyl)-methan (H₁₂-MDA), Bis-(4-amino-3-methylcyclohexyl)-methan, Bis-(4-amino-3-ethylcyclohexyl)-methan, Bis-(4-amino-3,5-dimethylcyclohexyl)-methan, Bis-(4-amino-3-ethyl-5-methylcyclohexyl)-methan (M-MECA), 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)-cyclohexan, 2,5(2,6)-Bis-(aminomethyl)-bicyclo[2.2.1]heptan (NBDA), 3(4),8(9)-Bis-(aminomethyl)-tricyclo[5.2.1.0^{2.6}]decan, 1,4-Diamino-2,2,6-trimethylcyclohexan (TMCDA), 1,8-Menthandiamin, 3,9-Bis-(3-aminopropyl)-2,4,8,10-tetraoxaspiro[5.5]undecan sowie 1,3- und 1,4-Xylylendiamin;
- Ethergruppen-haltige aliphatische Diamine, beispielsweise Bis-(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin und höhere Oligomere dieser Diamine, Bis-(3-aminopropyl)polytetrahydrofurane und andere Polytetrahydrofuran-diamine mit Molekulargewichten im Bereich von beispielsweise 350 bis 5200, sowie Polyoxyalkylen-Diamine. Letztere stellen typischerweise Produkte aus der Aminierung von Polyoxyalkylen-Diolen dar und sind beispielsweise erhältlich unter dem Namen Jeffamine^{®} (von Huntsman), unter dem Namen Polyetheramin (von BASF) oder unter dem Namen PC Amine^{®} (von Nitroil). Insbesondere geeignete Polyoxyalkylen-Diamine sind Jeffamine^{®} D-230, Jeffamine^{®} D-400, Jeffamine^{®} D-2000, Jeffamine^{®} D-4000, Jeffamine^{®} XTJ-511, Jeffamine^{®} ED-600, Jeffamine^{®} ED-900, Jeffamine^{®} ED-2003, Jeffamine^{®} XTJ-568, Jeffamine^{®} XTJ-569, Jeffamine^{®} XTJ-523, Jeffamine^{®} XTJ-536, Jeffamine^{®} XTJ-542, Jeffamine^{®} XTJ-559, Jeffamine^{®} EDR-104, Jeffamine^{®} EDR-148, Jeffamine^{®} EDR-176; Polyetheramin D 230, Polyetheramin D 400 und Polyetheramin D 2000, PC Amine^{®} DA 250, PC Amine^{®} DA 400, PC Amine^{®} DA 650 und PC Amine^{®} DA 2000;
- aliphatische, cycloaliphatische oder arylaliphatische Triamine wie 4-Aminomethyl-1,8-octandiamin, 1,3,5-Tris-(aminomethyl)-benzol, 1,3,5-Tris-(aminomethyl)-cyclohexan, Tris-(2-aminoethyl)-amin, Tris-(2-aminopropyl)-amin, Tris-(3-aminopropyl)-amin;
- Polyoxyalkylen-Triamine, welche typischerweise Produkte aus der Aminierung von Polyoxyalkylen-Triolen darstellen und beispielsweise erhältlich sind unter dem Handelsnamen Jeffamine^{®} (von Huntsman), unter dem Namen Polyetheramin (von BASF) oder unter dem Namen PC Amine^{®} (von Nitroil), wie zum Beispiel Jeffamine^{®} T-403, Jeffamine^{®} T-3000, Jeffamine^{®} T-5000; Polyetheramin T403, Polyetheramin T5000; und PC Amine^{®} TA 403, PC Amine^{®} TA 5000.

Als Amin **B** geeignet sind in einer weiteren Ausführungsform Polyamine mit mindestens zwei primären aromatischen Aminogruppen, insbesondere
- aromatische Di- und Triamine, wie beispielsweise 1,2-, 1,3- und 1,4-Phenylendiamin, 2,4- und 2,6-Toluylendiamin (TDA), 3,4-Toluylendiamin, 3,5-Dimethylthio-2,4- und -2,6-toluylendiamin, 3,5-Diethyl-2,4- und -2,6-toluylendiamin (DETDA), 2,4,6-Triethyl-1,3-phenylendiamin, 2,4,6-Triisopropyl-1,3-phenylendiamin, 3-Ethyl-5-methyl-2,4-toluylendiamin, 3,5-Diisopropyl-2,4-toluylendiamin, 3,5-Bis-(1-methylpropyl)-2,4-toluylendiamin, 3,5-Bis-(tert.butyl)-2,4-toluylendiamin, 3-Ethyl-5-isopropyl-2,4-toluylendiamin, 5-Isopropyl-2,4-toluylendiamin, 5-(tert.Butyl)-2,4-toluylendiamin, 4,6-Bis-(1-methylpropyl)-1,3-phenylendiamin, 4-Isopropyl-6-(tert.butyl)-1,3-phenylendiamin, 4-Ethyl-6-isopropyl-1,3-phenylendiamin, 4-Ethyl-6-(2-methylpropyl)-1,3-phenylendiamin, 4-Ethyl-6-(1-methylpropyl)-1,3-phenylendiamin, 4-Ethyl-6-(2-methylpropyl)-1,3-phenylendiamin, 4-Isopropyl-6-(1-methylpropyl)-1,3-phenylendiamin, 4-(tert.Butyl)-6-(2-methylpropyl)-1,3-phenylendiamin, 4-Cyclopentyl-6-ethyl-1,3-phenylendiamin, 4-Cyclopentyl-6-isopropyl-1,3-phenylendiamin, 4,6-Dicyclopentyl-1,3-phenylendiamin, 3-Isopropyl-2,6-toluylendiamin, 2-Methylpropyl-(4-chloro-3,5-diaminobenzoat), tert.Butyl-(4-chloro-3,5-diaminobenzoat), 2,6-Diaminopyridin, Melamin, 4,4'-, 2,4'- und 2,2'-Diaminodiphenylmethan (MDA), 3,3'-Dimethyl-4,4'-diaminodiphenylmethan, 3,3'-Dichloro-4,4'-diaminodiphenylmethan (MOCA), 3,3',5,5'-Tetraethyl-4,4'-diaminodiphenylmethan (M-DEA), 3,3',5,5'-Tetraethyl-2,2'-dichloro-4,4'-diaminodiphenylmethan (M-CDEA), 3,3'-Diisopropyl-5,5'-dimethyl-4,4'-diaminodiphenylmethan (M-MIPA), 3,3',5,5'-Tetraisopropyl-4,4'-diaminodiphenylmethan (M-DIPA), 3,3',5,5'-Tetra-(1-methylpropyl)-4,4'-diaminodiphenylmethan, 3,3'-Dimethyl-5,5'-di-tert.butyl-4,4'-diaminodiphenylmethan, 3,3'-Di-tert.butyl-4,4'-diaminodiphenylmethan, 4,4'-Diaminodiphenylsulfon (DDS), 4-Amino-N-(4-aminophenyl)-benzolsulfonamid, 5,5'-Methylendianthranilsäure, Dimethyl-(5,5'-Methylendianthranilat), 1,3-Propylen-bis-(4-aminobenzoat), 1,4-Butylen-bis-(4-aminobenzoat), Polytetramethylenoxid-bis-(4-aminobenzoat) (erhältlich als Versalink^{®} von Air Products) und 1,2-Bis-(2-aminophenylthio)-ethan.

Als Amin **B** geeignet sind in einer weiteren Ausführungsform Polyamine mit primären aromatischen und primären aliphatischen Aminogruppen, wie insbesondere 4-Aminoethylanilin, 4-Aminomethylanilin, 4-[(4-Aminocyclohexyl)methyl]anilin, 2-Aminoethylanilin, 2-Aminomethylanilin, 2-[(4-Aminocyclohexyl)methyl]anilin und 4-[(2-Aminocyclohexyl)methyl]anilin.

Als "aliphatisch" wird ein Amin oder eine Aminogruppe bezeichnet, worin das Stickstoffatom ausschliesslich an aliphatische, cycloaliphatische oder arylaliphatische Reste gebunden ist. Als "aromatisch" wird ein Amin oder eine Aminogruppe bezeichnet, worin das Stickstoffatom direkt an mindestens einen aromatischen oder heteroaromatischen Rest gebunden ist.

Bevorzugt ist das Amin **B** ausgewählt aus der Gruppe bestehend aus 1,6-Hexamethylendiamin, MPMD, DAMP, IPDA, TMD, 1,3-Xylylendiamin, 1,3-Bis-(aminomethyl)cyclohexan, Bis-(4-aminocyclohexyl)-methan, Bis-(4-amino-3-methylcyclohexyl)-methan, 3(4),8(9)-Bis-(aminomethyl)-tricyclo[5.2.1.0^{2,6}]-decan, 1,2-, 1,3- und 1,4-Diaminocyclohexan, 1,4-Diamino-2,2,6-trimethylcyclohexan, 3,6-Dioxaoctan-1,8-diamin, 4,7-Dioxadecan-1,10-diamin, 4-Aminomethyl-1,8-octandiamin; Polyoxyalkylen-Polyaminen mit zwei oder drei Aminogruppen, insbesondere die unter dem Handelsnamen Jeffamine^{®} erhältlichen Typen D-230, D-400, D-2000, T-403 und T-5000 von Huntsman und dazu analoge Verbindungen von BASF oder Nitroil; 1,3- und 1,4-Phenylendiamin, 2,4- und 2,6-Toluylendiamin, 4,4'-, 2,4'- und 2,2'-Diaminodiphenylmethan, 3,3'-Dichlor-4,4'-diaminodiphenylmethan; und Mischungen der genannten Polyamine.

Besonders bevorzugt ist das Amin **B** ausgewählt aus der Gruppe bestehend aus 1,6-Hexamethylendiamin, MPMD, DAMP, IPDA, TMD und Polyoxyalkylen-Polyaminen mit zwei oder drei Aminogruppen, insbesondere die unter dem Handelsnamen Jeffamine^{®} erhältlichen Typen D-230, D-400 und T-403 von Huntsman und dazu analoge Verbindungen von BASF oder Nitroil.

Als Aldehyd **ALD** geeignet sind primäre und sekundäre aliphatische Aldehyde, insbesondere Propanal, 2-Methylpropanal, Butanal, 2-Methylbutanal, 2-Ethylbutanal, Pentanal, 2-Methylpentanal, 3-Methylpentanal, 4-Methylpentanal, 2,3-Dimethylpentanal, Hexanal, 2-Ethyl-hexanal, Heptanal, Octanal, Nonanal, Decanal, Undecanal, 2-Methyl-undecanal, Dodecanal, Methoxyacetatdehyd, Cyclopropancarboxaldehyd, Cyclopentancarboxaldehyd, Cyclohexancarboxaldehyd und Diphenylacetaldehyd.

Als Aldehyd **ALD** besonders geeignet sind Aldehyde, welche nicht enolisierbar sind, da diese bei der Umsetzung mit primären Aminen Aldiminogruppen bilden, welche nicht zu Enaminogruppen tautomerisieren können und deshalb besonders gut blockierte Aminogruppen darstellen. Insbesondere tertiäre aliphatische sowie aromatische Aldehyde stellen nichtenolisierbare Aldehyde dar.

Als Aldehyd **ALD** besonders geeignet sind tertiäre aliphatische Aldehyde **ALD1** der Formel (V a), 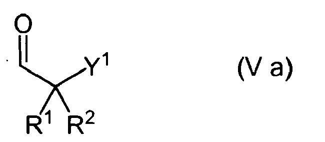 wobei R¹, R² und Y¹ die bereits erwähnten Bedeutungen aufweisen.

Geeignete Aldehyd **ALD1** der Formel (V a) sind insbesondere Pivalaldehyd (= 2,2-Dimethyl-propanal), 2,2-Dimethyl-butanal, 2,2-Diethyl-butanal, 1-Methyl-cyclopentancarboxaldehyd, 1-Methyl-cyclohexancarboxaldehyd; Ether aus 2-Hydroxy-2-methylpropanal und Alkoholen wie Propanol, Isopropanol, Butanol und 2-Ethylhexanol; Ester aus 2-Formyl-2-methylpropionsäure oder 3-Formyl-3-methylbuttersäure und Alkoholen wie Propanol, Isopropanol, Butanol und 2-Ethylhexanol; Ester aus 2-Hydroxy-2-methylpropanal und Carbonsäuren wie Buttersäure, Isobuttersäure und 2-Ethylhexansäure; sowie die im folgenden als besonders geeignet beschriebenen Ether und Ester von 2,2-disubstituierten 3-Hydroxypropanalen, -butanalen oder analogen höheren Aldehyden, insbesondere von 2,2-Dimethyl-3-hydroxypropanal.

Besonders geeignete Aldehyde **ALD1** sind in einer Ausführungsform Aldehyde **ALD2** der Formel (V b), 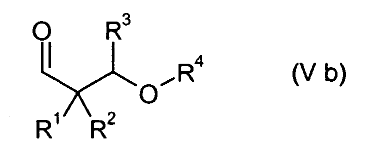 wobei R¹, R², R³ und R⁴ die bereits erwähnten Bedeutungen aufweisen.

Die Aldehyde **ALD2** der Formel (V b) stellen Ether von aliphatischen, cycloaliphatischen oder arylaliphatischen 2,2-disubstituierten 3-Hydroxyaldehyden mit Alkoholen oder Phenolen der Formel R⁴-OH dar, beispielsweise Fettalkoholen oder Phenolen. Geeignete 2,2-disubstituierte 3-Hydroxyaldehyde sind ihrerseits erhältlich aus Aldol-Reaktionen, insbesondere gekreuzten Aldol-Reaktionen, zwischen primären oder sekundären aliphatischen Aldehyden, insbesondere Formaldehyd, und sekundären aliphatischen, sekundären cycloaliphatischen oder sekundären arylaliphatischen Aldehyden, wie insbesondere Isobutyraldehyd, 2-Methylbutyraldehyd, 2-Ethylbutyraldehyd, 2-Methylvaleraldehyd, 2-Ethylcapronaldehyd, Cyclopentancarboxaldehyd, Cyclohexancarboxaldehyd, 1,2,3,6-Tetrahydrobenzaldehyd, 2-Methyl-3-phenylpropionaldehyd, 2-Phenylpropionaldehyd (Hydratropaldehyd) oder Diphenylacetaldehyd. Beispiele geeigneter 2,2-disubstituierter 3-Hydroxyaldehyde sind 2,2-Dimethyl-3-hydroxypropanal, 2-Hydroxymethyl-2-methyl-butanal, 2-Hydroxymethyl-2-ethyl-butanal, 2-Hydroxymethyl-2-methyl-pentanal, 2-Hydroxymethyl-2-ethyl-hexanal, 1-Hydroxymethyl-cyclopentancarboxaldehyd, 1-Hydroxymethyl-cyclohexancarboxaldehyd 1-Hydroxymethyl-cyclohex-3-encarboxaldehyd, 2-Hydroxymethyl-2-methyl-3-phenyl-propanal, 3-Hydroxy-2-methyl-2-phenyl-propanal und 3-Hydroxy-2,2-diphenyl-propanal.

Besonders geeignete Aldehyde **ALD2** sind 2,2-Dimethyl-3-phenoxypropanal, 3-Cyclohexyloxy-2,2-dimethyl-propanal, 2,2-Dimethyl-3-(2-ethylhexyloxy)-propanal, 2,2-Dimethyl-3-lauroxy-propanal und 2,2-Dimethyl-3-stearoxy-propanal.

Besonders geeignete Aldehyde **ALD1** sind in einer weiteren Ausführungsform Aldehyde **ALD3** der Formel (V c), 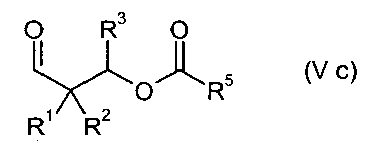 wobei R¹, R², R³ und R⁵ die bereits erwähnten Bedeutungen aufweisen.

Die Aldehyde **ALD3** der Formel (V c) stellen Ester der bereits beschriebenen 2,2-disubstituierten 3-Hydroxyaldehyde, wie insbesondere 2,2-Dimethyl-3-hydroxypropanal, 2-Hydroxymethyl-2-methyl-butanal, 2-Hydroxymethyl-2-ethyl-butanal, 2-Hydroxymethyl-2-methyl-pentanal, 2-Hydroxymethyl-2-ethyl-hexanal, 1-Hydroxymethyl-cyclopentancarboxaldehyd, 1-Hydroxymethyl-cyclohexancarboxaldehyd 1-Hydroxymethyl-cyclohex-3-encarboxaldehyd, 2-Hydroxymethyl-2-methyl-3-phenyl-propanal, 3-Hydroxy-2-methyl-2-phenyl-propanal und 3-Hydroxy-2,2-diphenyl-propanal, mit geeigneten Carbonsäuren dar.

Für diese Umsetzung geeignete Carbonsäuren sind beispielsweise gesättigte aliphatische Carbonsäuren, wie Ameisensäure, Essigsäure, Propionsäure, Buttersäure, Isobuttersäure, Valeriansäure, Capronsäure, 2-Ethylcapronsäure, Oenanthsäure, Caprylsäure, Pelargonsäure, Caprinsäure, Undecansäure, Laurinsäure, Tridecansäure, Myristinsäure, Pentadecansäure, Palmitinsäure, Margarinsäure, Stearinsäure, Nonadecansäure, Arachinsäure; einfach ungesättigte aliphatische Carbonsäuren wie Palmitoleinsäure, Ölsäure, Erucasäure; mehrfach ungesättigte aliphatische Carbonsäuren wie Linolsäure, Linolensäure, Elaeostearinsäure, Arachidonsäure; cycloaliphatische Carbonsäuren wie Cyclohexancarbonsäure; arylaliphatische Carbonsäuren wie Phenylessigsäure; aromatische Carbonsäuren wie Benzoesäure, Naphthoesäure, Toluylsäure, Anissäure; Isomere dieser Säuren; Fettsäuregemische aus der technischen Verseifung von natürlichen Ölen und Fetten wie beispielsweise Rapsöl, Sonnenblumenöl, Leinöl, Ölbaumöl, Kokosnussöl, Ölpalmkernöl und Ölpalmöl; sowie Dicarbonsäuremonoalkyl- und -arylester, wie sie aus der einfachen Veresterung von Dicarbonsäuren wie Bernsteinsäure, Glutarsäure, Adipinsäure, Pimelinsäure, Korksäure, Azelainsäure, Sebacinsäure, 1,12-Dodecandisäure, Maleinsäure, Fumarsäure, Hexahydrophthalsäure, Hexahydroisophthalsäure, Hexahydroterephthalsäure, 3,6,9-Trioxaundecandisäure und ähnliche Derivate von Polyethylenglykol, mit Alkoholen wie Methanol, Ethanol, Propanol, Butanol, höheren Homologen und Isomeren dieser Alkohole erhalten werden. Bevorzugt sind Carbonsäuren mit mindestens 7 C-Atomen, insbesondere solche mit mindestens 12 C-Atomen.

Als Aldehyd **ALD** der Formel (V) besonders geeignet sind in einer weiteren Ausführungsform Aldehyde **ALD4** der Formel (V d), 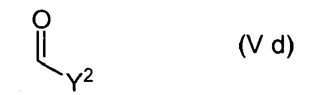 wobei Y² die bereits genannten Bedeutungen aufweist.

Als Aldehyd **ALD4** geeignet sind einerseits aromatische Aldehyde, wie insbesondere Benzaldehyd, 2- und 3- und 4-Tolualdehyd, 4-Ethyl- und 4-Propyl- und 4-Isopropyl und 4-Butyl-benzaldehyd, 2,4-Dimethylbenzaldehyd, 2,4,5-Trimethylbenzaldehyd, 4-Acetoxybenzaldehyd, 4-Anisaldehyd, 4-Ethoxybenzaldehyd, die isomeren Di- und Trialkoxybenzaldehyde, 2-, 3- und 4-Nitrobenzaldehyd, 2- und 3- und 4-Formylpyridin, 2-Furfuraldehyd, 2-Thiophencarbaldehyd, 1- und 2-Naphthylaldehyd, 3- und 4-Phenyloxy-benzaldehyd, Chinolin-2-carbaldehyd und dessen 3-, 4-, 5-, 6-, 7- und 8-Stellungsisomere, sowie Anthracen-9-carbaldehyd; sowie weiterhin Glyoxal, Glyoxalsäureester wie zum Beispiel Glyoxalsäuremethylester, Zimtaldehyd und substituierte Zimtaldehyde.

Als Aldehyd **ALD** der Formel (V) bevorzugt sind die nicht enolisierbaren Aldehyde **ALD1** der Formel (V a), **ALD2** der Formel (V b), **ALD3** der Formel (V c) und **ALD4** der Formel (V d). Besonders bevorzugt sind die Aldehyde **ALD2** der Formel (V b) und **ALD3** der Formel (V c). Insbesondere bevorzugt sind die Aldehyde **ALD3** der Formel (V c), insbesondere diejenigen, bei welchen der Rest R⁵ 6 bis 30 C-Atome aufweist. Am meisten bevorzugt sind geruchsfreie Aldehyde **ALD3** der Formel (V c), bei welchen der Rest R⁵ 11 bis 30 C-Atome aufweist. Davon speziell bevorzugt ist 2,2-Dimethyl-3-lauroyloxy-propanal.

Das Aldimin **A** der Formel (I) ist in der einkomponentigen feuchtigkeitshärtenden Zusammensetzung in einer solchen Menge vorhanden, dass das Verhältnis **V1** zwischen der Anzahl Aldiminogruppen und der Anzahl Isocyanatgruppen in der Zusammensetzung im Bereich von 0.2 bis 0.8, insbesondere 0.3 bis 0.6, liegt.

Aldimine **A1** der Formel (I a), welche als Y¹ einen Rest der Formel (III) mit einem Rest R⁵ mit 6 bis 30 C-Atomen aufweisen, sind geruchsarm und deshalb bevorzugt.

Aldimine **A1** der Formel (I a), welche als Y¹ einen Rest der Formel (III) mit einem Rest R⁵ mit 11 bis 30 C-Atomen aufweisen, sind geruchsfrei und deshalb besonders bevorzugt.

Zusammensetzungen enthaltend solche Aldimine **A1** weisen vor, während und nach der Aushärtung wenig oder keinen Geruch auf.

Unter einer "geruchsarmen" Substanz und einer Substanz "mit einer geringen Geruchsbildung" wird unterschiedslos eine Substanz verstanden, deren Geruch von menschlichen Individuen nur in geringem Masse wahrnehmbar, d.h. riechbar, ist, die also keinen intensiven Geruch aufweist wie beispielsweise Formaldehyd, Acetaldehyd, Isobutyraldehyd, oder Lösemittel wie Aceton, Methylethylketon oder Methylisobutylketon, und wobei dieser geringe Geruch von den meisten menschlichen Individuen nicht als unangenehm oder abstossend empfunden wird.

Unter einer "geruchsfreien" Substanz wird eine Substanz verstanden, die für die meisten menschlichen Individuen nicht riechbar ist, die also keinen wahrnehmbaren Geruch aufweist.

Die einkomponentige feuchtigkeitshärtende Zusammensetzung umfasst weiterhin mindestens ein Organoalkoxysilan **OS,** welches keine gegenüber Isocyanatgruppen reaktive Gruppe aufweist, und welches mindestens eine Gruppierung der Formel (VI) aufweist.

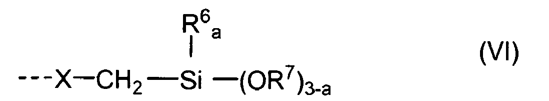

Solche Silane werden auch als α-funktionelle Silane oder kurz als α-Silane bezeichnet, da sich X in α-Stellung zum Siliciumatom befindet, von diesem also durch einen Methylenrest getrennt ist. α-Silane weisen besondere Eigenschaften auf. Insbesondere weisen sie im Vergleich zu den sogenannten γ-funktionellen Silanen, bei welchen ein Heteroatom durch einen Propylenrest vom Siliciumatom getrennt ist, eine sehr hohe Reaktivität in Bezug auf ihre Hydrolyse auf.

Als Organoalkoxysilan **OS** sind insbesondere die Folgenden geeignet:

Methacryloxymethyl-trimethoxysilan, Methacryloxymethyl-dimethoxymethylsilan, Isocyanatomethyl-trimethoxysilan, Isocyanatomethyl-dimethoxymethylsilan, N-(Trimethoxysilylmethyl)-O-methyl-carbamat, N-(Dimethoxymethylsilylmethyl)-O-methyl-carbamat, α-Aminosilane wie N-Cyclohexyl-aminomethyl-trimethoxysilan, N-Cyclohexyl-aminomethyl-dimethoxymethylsilan, N-Phenyl-aminomethyl-trimethoxysilan, N-Phenyl-aminomethyl-dimethoxymethylsilan; weiterhin entsprechende α-funktionelle Organoalkoxysilane mit Ethoxy- anstelle der Methoxygruppen; weiterhin Addukte **AD** von α-Aminosilanen mit Isocyanaten oder Isothiocyanaten, sowie weiterhin oligomere Formen der genannten Organoalkoxysilane.

Viele der genannten Organoalkoxysilane und Addukte **AD** sind kommerziell erhältlich, insbesondere von Wacker Chemie.

Als Isocyanate oder Isothiocyanate für Addukte **AD** geeignet sind in einer Ausführungsform Monoisocyanate bzw. Monoisothiocyanate wie beispielsweise Methylisothiocyanat, Ethylisothiocyanat, Butylisocyanat, Hexylisocyanat, Phenylisocyanat, Phenylisothiocyanat, p-Toluolsulfonylisocyanat und Isocyanatopropyltrimethoxysilan. Weiterhin geeignete Isocyanate für Addukte **AD** sind Polyisocyanate wie insbesondere die genannten Polyisocyanate **PI.** Weiterhin geeignete Isocyanate für Addukte **AD** sind Isocyanatgruppen aufweisende Polyurethanpolymere, insbesondere die genannten Polyurethanpolymere **PUP.** Addukte aus Isocyanatgruppen aufweisenden Polyurethanpolymeren und α-Aminosilanen können auch als αsilanfunktionelle Polymere bezeichnet werden.

Weiterhin geeignet als Organoalkoxysilan **OS** sind andere αsilanfunktionelle Polymere als die bereits genannten. Beispielsweise geeignet sind α-silanfunktionelle Polymere mit mindestens einer Gruppierung der Formel (VI), welche erhältlich sind durch die Umsetzung von hydroxyfunktionellen Polymeren mit beispielsweise Isocyanatomethyl-trimethoxysilan oder Isocyanatomethyl-dimethoxymethylsilan, wobei als hydroxyfuktionelle Polymere insbesondere Polyetherpolyole geeignet sind, welche gegebenenfalls mit Polyisocyanaten kettenverlängert sind.

Wird als Organoalkoxysilan **OS** ein α-Aminosilan eingesetzt, so wird in der Zusammensetzung in situ ein Addukt **AD** mit dem vorhandenen Polyisocyanat **P** gebildet.

Bevorzugt weist das Organoalkoxysilan **OS** Methoxy- oder Ethoxyreste auf, besonders bevorzugt Methoxyreste. Am meisten bevorzugt weist das Organoalkoxysilan **OS** mindestens eine Gruppierung der Formel (VI) auf, bei welcher a für null oder 1 und R⁷ für einen Methylrest stehen.

Bevorzugt ist das Organoalkoxysilan **OS** ausgewählt aus der Gruppe bestehend aus Methacryloxymethyl-trimethoxysilan, Methacryloxymethyl-dimethoxymethylsilan, Isocyanatomethyl-trimethoxysilan, Isocyanatomethyl-dimethoxymethylsilan, N-(Trimethoxysilylmethyl)-O-methyl-carbamat, N-(Dimethoxymethylsilylmethyl)-O-methyl-carbamat, N-Cyclohexyl-aminomethyl-trimethoxysilan, N-Cyclohexyl-aminomethyl-dimethoxymethylsilan, N-Phenyl-aminomethyl-trimethoxysilan, N-Phenyl-aminomethyl-dimethoxymethylsilan und αsilanfunktionellen Polymeren aus der Umsetzung von gegebenenfalls kettenverlängerten Polyetherpolyolen mit Isocyanatomethyl-trimethoxysilan oder Isocyanatomethyl-dimethoxymethylsilan; sowie den entsprechenden α-Silanen aus dieser Gruppe mit Ethoxy- anstelle der Methoxyreste.

Als Organoalkoxysilan **OS** besonders bevorzugt sind Methacryloxymethyl-trimethoxysilan, N-(Trimethoxysilylmethyl)-O-methyl-carbamät und α-silanfunktionelle Polymere aus der Umsetzung von gegebenenfalls kettenverlängerten Polyetherpolyolen mit Isocyanatomethyl-dimethoxymethylsilan.

Das Organoalkoxysilan **OS** ist in der einkomponentigen feuchtigkeitshärtenden Zusammensetzung in einer solchen Menge vorhanden, dass das Verhältnis **V2** zwischen der Anzahl Alkoxygruppen des Organoalkoxysilans **OS** und der Anzahl Isocyanatgruppen im Bereich von 0.1 bis 0.5, insbesondere 0.15 bis 0.35, liegt.

Bei Kontakt mit Wasser werden die Silangruppen des Organoalkoxysilans **OS** hydrolysiert, wobei die Alkoxygruppen als Alkohol abgespalten werden.

Die einkomponentige feuchtigkeitshärtende Zusammensetzung umfasst weiterhin mindestens eine Säure **S**.

Die Säure **S** ist insbesondere eine beliebige Br⌀nsted-Säure, wie beispielsweise Salzsäure, Schwefelsäure, Schweflige Säure, Amidoschwefelsäure, Phosphorsäure, Mono- und Dialkyl- und -arylphosphate wie Tridecylphosphat, Dibutylphosphat, Diphenylphosphat und Bis-(2-ethylhexyl)phosphat, Phosphorige Säure, Salpetersäure, Salpetrige Säure, Perchlorsäure, Chlorige Säure, sowie beliebige organische Br⌀nsted-Säuren, sowie Mischungen der vorgenannten Br⌀nsted-Säuren.

Bevorzugt als Säure **S** sind organische Br⌀nsted-Säuren wie beispielsweise
- Carbonsäuren, beispielsweise gesättigte aliphatische Monocarbonsäuren wie Ameisensäure, Essigsäure, Propionsäure, Buttersäure, Isobuttersäure, Valeriansäure, Isovaleriansäure, Pivalinsäure, Capronsäure, Oenanthsäure, Caprylsäure, 2-Ethylhexansäure, Pelargonsäure, Caprinsäure, Neodecansäure, Undecansäure, Laurinsäure, Tridecansäure, Myristinsäure, Pentadecansäure, Palmitinsäure, Margarinsäure, Stearinsäure, Isostearinsäure, Arachinsäure, Behensäure; gesättigte aliphatische Polycarbonsäuren wie Oxalsäure, Malonsäure, Bernsteinsäure, Glutarsäure, Adipinsäure, Pimelinsäure, Korksäure, Azelainsäure, Sebacinsäure, Dodecandisäure; einfach oder mehrfach ungesättigte aliphatische Mono- und Polycarbonsäuren wie Palmitoleinsäure, Ölsäure, Erucasäure, Sorbinsäure, Linolsäure, Linolensäure, Elaeostearinsäure, Ricinolsäure, Ricinensäure, Maleinsäure, Fumarsäure, Sorbinsäure; cycloaliphatische Mono- und Polycarbonsäuren wie Cyclohexancarbonsäure, Hexahydrophthalsäure, Tetrahydrophthalsäure, Harzsäuren, Naphthensäuren; aliphatische Hydroxycarbonsäuren wie Glykolsäure, Milchsäure, Mandelsäure, Hydroxybuttersäure, Weinsäure, Apfelsäure, Citronensäure; halogenierte aliphatische Carbonsäuren wie Trichloressigsäure oder 2-Chlorpropionsäure, aromatische Mono- und Polycarbonsäuren wie Benzoesäure, Salicylsäure, Gallussäure, die stellungsisomeren Tolylsäuren, Methoxybenzoesäuren, Chlorbenzoesäuren, Nitrobenzoesäuren, Phthalsäure, Terephthalsäure, Isophthalsäure, technische Carbonsäure-Gemische wie zum Beispiel Versatic-Säuren; Polycarbonsäuren aus der Polymerisation oder Copolymerisation von Acryl- und Methacrylsäure;
- Carbonsäureanhydride wie Phthalsäureanhydrid, Hexahydrophthalsäureanhydrid und Hexahydromethylphthalsäureanhydrid, Silylester von organischen Carbonsäuren;
- Silylester von organischen Carbonsäuren;
- Sulfonsäuren wie Methylsulfonsäure, Vinylsulfonsäure, Butylsulfonsäure, 3-Hydroxypropylsulfonsäure, Sulfoessigsäure, Benzolsulfonsäure, p-Toluolsulfonsäure, p-Xylolsulfonsäure, 4-Dodecylbenzolsulfonsäure, 1-Naphtalinsulfonsäure, Dinonylnaphthalinsulfonsäure und Dinonylnaphthalindisulfonsäure, sowie Sulfonsäureester;
- organische Phosphonsäuren und Monoalkylphosphonate wie Methylphosphonsäure, Vinylphosphonsäure, Butylphosphonsäure, 2-Hydroxyethylphosphonsäure, Phenylphosphonsäure, Toluylphosphonsäure, Xylylphosphonsäure, Phosphonoessigsäure, Etidronsäure, Methylphosphonsäure-ethylester;
sowie Mischungen der vorgenannten Br⌀nsted-Säuren.

Als Säure **S** bevorzugt sind organische Br⌀nsted-Säuren in Form von Carbonsäuren und Sulfonsäuren, insbesondere aromatische Carbonsäuren wie Benzoesäure und Salicylsäure. Besonders bevorzugt ist Salicylsäure.

Die Säure **S** hat eine katalytische Wirkung auf die Hydrolyse des Aldimins **A.** Dadurch bewirkt sie, je nach Konzentration und Säurestärke, eine mehr oder weniger starke Beschleunigung der Reaktion des Aldimins **A** mit Isocyanatgruppen, falls genügend Wasser in der Zusammensetzung vorhanden ist.

Üblicherweise ist die Säure **S** in der einkomponentigen feuchtigkeitshärtenden Zusammensetzung in einer Menge von 0.005 bis 2 Gewichts-%, bevorzugt 0.01 bis 0.5 Gewichts-%, vorhanden.

Gegebenenfalls umfasst die einkomponentige feuchtigkeitshärtende Zusammensetzung weiterhin mindestens einen Zinnkatalysator **Z** in Form einer Dialkylzinn(IV)-Verbindung. Als Zinnkatalysator **Z** sind insbesondere die Folgenden geeignet:
Dibutyl- und Dioctylzinndicarboxylate wie Dibutylzinndilaurat (DBTL), Dioctylzinndilaurat (DOTL), Dibutylzinndiacetat (DBTA), Dioctylzinndiacetat (DOTA), Dibutylzinn-bis(2-ethylhexanoat), Dioctylzinn-bis(2-ethylhexanoat), Dibutylzinndibutylat, Dibutylzinn-bis(neodecanoat), Dibutylzinndiversatat, Dibutylzinn-bis(methylmaleat), Dibutylzinn-bis(monobutylmaleat), Dibutylzinn-bis(octylmaleat), Dibutylzinndioctanoat, Dioctylzinndioctanoat, Dibutylzinn-bis(isooctanoat), Dibutylzinndipalmiat, Dibutylzinndistearat, Dibutylzinndioleat, Dibutylzinndilinoleat, Dibutylzinndilinolenat, Dibutylzinnmaleat; Dibutyl- und Dioctylzinndiketonate wie Dibutylzinndiacetylacetonat, Dioctylzinndiacetylacetonat; Dibutylzinndichlorid, Dioctylzinndichlorid, Dibutylzinndibutoxid, Dibutylzinnoxid (DBTO), Dioctylzinnoxid; Stannoxane wie Dibutyl-lauryldistannoxan und Sn,Sn'-Bis(triethylorthosilicato-dibutyl)-distannoxan (Neostann™ U700 von Nitto Kasei); sowie entsprechende Dialkylzinn(IV)-Verbindungen mit andern Alkylgruppen anstelle der Butyl- oder Octylgruppen.

Bevorzugt ist der Zinnkatalysator **Z** ausgewählt aus der Gruppe bestehend aus Dibutylzinndichlorid, Dibutylzinndilaurat und Dioctylzinndilaurat.

Vorteilhaft ist ein Zinnkatalysator **Z** in der Zusammensetzung in einer solchen Menge vorhanden, dass das Verhältnis zwischen der Anzahl Zinnatome aus dem Zinnkatalysator **Z** und der Anzahl Isocyanatgruppen den Wert von 0.005 unterschreitet.

Der Zinnkatalysator **Z** beschleunigt die Hydrolyse der Silangruppen und die Reaktion der Isocyanatgruppen mit beispielsweise Wasser und Alkohol.

Die einkomponentige feuchtigkeitshärtende Zusammensetzung enthält gegebenenfalls weitere Bestandteile, insbesondere in Polyurethanzusammensetzungen üblicherweise eingesetzte Hilfs- und Zusatzstoffe, beispielsweise die Folgenden:
- Weichmacher, insbesondere Carbonsäureester wie Phthalate, insbesondere Dioctylphthalat, Diisononylphthalat oder Diisodecylphthalat, Adipate, insbesondere Dioctyladipat, Azelate und Sebacate, organische Phosphor- und Sulfonsäureester oder Polybutene;
- nicht-reaktive thermoplastische Polymere, wie beispielsweise Homo- oder Copolymere von ungesättigten Monomeren, insbesondere aus der Gruppe umfassend Ethylen, Propylen, Butylen, Isobutylen, Isopren, Vinylacetat und Alkyl(meth)acrylate, insbesondere Polyethylene (PE), Polypropylene (PP), Polyisobutylene, Ethylenvinylacetat-Copolymere (EVA) und ataktische Poly-α-Olefine (APAO);
- Lösemittel;
- anorganische und organische Füllstoffe, zum Beispiel gemahlene oder gefällte Calciumcarbonate, welche gegebenenfalls mit Fettsäuren, insbesondere Stearaten, beschichtet sind, Baryt (BaSO₄, auch Schwerspat genannt), Quarzmehle, calcinierte Kaoline, Aluminiumoxide, Aluminiumhydroxide, Kieselsäuren, insbesondere hochdisperse Kieselsäuren aus Pyrolyseprozessen, Russe, insbesondere industriell hergestellte Russe (im Folgenden als "Russ" bezeichnet), PVC-Pulver oder Hohlkugeln;
- Fasern, beispielsweise aus Polyethylen;
- Pigmente, beispielsweise Titandioxid oder Eisenoxide;
- weitere Katalysatoren, welche die Reaktion der Isocyanatgruppen beschleunigen, beispielsweise Zinn(II)-Verbindungen wie Zinndioctoat und Zinn-bis(neodecanoat), Bismutverbindungen wie Bismuttrioctoat und Bismut-tris(neodecanoat), und tertiäre Aminogruppen enthaltende Verbindungen wie 2,2'-Dimorpholinodiethylether und 1,4-Diazabicyclo[2.2.2]octan;
- Rheologie-Modifizierer wie beispielsweise Verdickungsmittel oder Thixotropiermittel, zum Beispiel Harnstoffverbindungen, Polyamidwachse, Bentonite oder pyrogene Kieselsäuren;
- Trocknungsmittel, wie beispielsweise Molekularsiebe, Calciumoxid, hochreaktive Isocyanate wie p-Tosylisocyanat, Orthoameisensäureester, Kieselsäureester wie Tetramethoxy- oder -ethoxysilan;
- weitere Organoalkoxysilane, wie beispielsweise Vinylsilane, Alkylsilane, Arylsilane oder γ-funktionelle Organoalkoxysilane wie insbesondere Epoxysilane, (Meth)acrylsilane, Isocyanatosilane, Carbamatosilane, S-(Alkylcarbonyl)-mercaptosilane und Aldiminosilane, sowie oligomere Formen dieser Silane;
- Stabilisatoren gegen Wärme, Licht- und UV-Strahlung;
- flammhemmende Substanzen;
- oberflächenaktive Substanzen wie beispielsweise Netzmittel, Verlaufsmittel, Entlüftungsmittel oder Entschäumer;
- Biozide wie beispielsweise Algizide, Fungizide oder das Pilzwachstum hemmende Substanzen;
sowie weitere, üblicherweise in einkomponentigen feuchtigkeitshärtenden Polyurethanzusammensetzungen eingesetzte Substanzen.

Es ist vorteilhaft, beim Einsatz solcher weiterer Bestandteile darauf zu achten, dass diese die Lagerstabilität der Zusammensetzung nicht stark beeinträchtigen. Das heisst, dass sie während der Lagerung der Zusammensetzung unter Ausschluss von Feuchtigkeit die Vernetzung der Isocyanatgruppen nicht in signifikantem Ausmass auslösen. Insbesondere bedeutet dies, dass solchermassen verwendete Zusätze kein oder höchstens Spuren von Wasser enthalten sollten. Es kann sinnvoll sein, gewisse Zusätze vor dem Einmischen in die Zusammensetzung chemisch oder physikalisch zu trocknen.

Die einkomponentige feuchtigkeitshärtende Zusammensetzung wird unter Ausschluss von Feuchtigkeit hergestellt und aufbewahrt. Sie ist lagerstabil, d.h. sie kann unter Ausschluss von Feuchtigkeit in einer geeigneten Verpackung oder Anordnung, wie beispielsweise einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert. Üblicherweise wird die Lagerstabilität über die Messung der Viskosität oder der Auspresskraft ermittelt. Besonders lagerstabil sind aromatische Isocyanatgruppen enthaltende Zusammensetzungen, wenn als Aldimin **A** ein nicht-enolisierbares Aldimin **A1** der Formel (Ia) oder Ib) vorhanden ist.

Die Aldiminogruppen des Aldimins **A** haben die Eigenschaft, bei Kontakt mit Feuchtigkeit zu hydrolysieren. Die in der Zusammensetzung vorhandenen Isocyanatgruppen reagieren mit dem bei der Hydrolyse formal frei werdenden Amin **B.** Hierbei wird der entsprechende Aldehyd **ALD** der Formel (V) freigesetzt. Die Reaktion der Isocyanatgruppen mit dem hydrolysierenden Aldimin **A** muss dabei nicht notwendigerweise über das Amin **B** erfolgen. Selbstverständlich sind auch Reaktionen mit Zwischenstufen der Hydrolyse des Aldimins **A** möglich. Beispielsweise ist es denkbar, dass das hydrolysierende Aldimin **A** in der Form eines Halbaminals direkt mit den Isocyanatgruppen reagiert.

Weiterhin haben die Silangruppen des Organoalkoxysilans **OS** die Eigenschaft, bei Kontakt mit Feuchtigkeit zu hydrolysieren. Aufgrund der Tatsache, dass es sich bei den Organoalkoxysilanen **OS** um α-Silane handelt, erfolgt die Hydrolyse bei Kontakt mit Feuchtigkeit wesentlich schneller als bei andern Organoalkoxysilanen. Bei der Hydrolyse werden unter Freisetzung von Alkohol Si-OH-Gruppen, sogenannte Silanolgruppen, gebildet. Der freigesetzte Alkohol, insbesondere Methanol oder Ethanol, kann mit vorhandenen Isocyanatgruppen reagieren, wobei jeweils eine O-Alkylcarbamatgruppe gebildet wird. Falls keine Isocyanatgruppen als Reaktionspartner für freiwerdendes Methanol zur Verfügung steht, diffundiert dieses allmählich aus der Zusammensetzung heraus. Die entstehenden Silanolgruppen ihrerseits können unter Freisetzung von Wasser untereinander zu Si-O-Si-Gruppierungen kondensieren.

Weiterhin können vorhandene Isocyanatgruppen direkt mit Feuchtigkeit reagieren. Dabei bildet sich aus zwei Isocyanatgruppen unter Abspaltung eines CO₂-Moleküls eine Harnstoffgruppe.

Bei der Reaktion der hydrolysierenden Aldimine **A** mit Isocyanat-gruppen und bei der Reaktion von Isocyanatgruppen direkt Feuchtigkeit handelt es sich um sogenannte Vernetzungsreaktionen. Als Ergebnis dieser Reaktionen härtet die Zusammensetzung schliesslich aus; dieser Prozess wird auch als Vernetzung bezeichnet.

Bei der Reaktion des Alkohols mit Isocanatgruppen handelt es sich um eine sogenannte Kettenabbruchreaktion. Die dabei gebildete O-Alkylcarbamatgruppe kann mit weiteren Isocyanatgruppen nicht mehr reagieren. Die Isocyanatgruppen sind somit "abgeblockt". Die O-Alkylcarbamatgruppen in der Zusammensetzung führen zu einem Verlust an Vernetzungsstellen und somit zu einer Reduktion der Elastitzität und mechanischen Festigkeit der ausgehärteten Zusammensetzung, also zu eher plastischen Eigenschaften.

Die für die Aushärtungsreaktion benötigte Feuchtigkeit kann entweder aus der Luft stammen (Luftfeuchtigkeit), oder aber die Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation eine Wasser enthaltende Komponente zugesetzt werden, zum Beispiel in Form einer wasserhaltigen Paste, die, beispielsweise über einen Statikmischer, eingemischt wird.

Bevorzugt wird die Zusammensetzung mittels Luftfeuchtigkeit ausgehärtet.

Die beschriebene einkomponentige feuchtigkeitshärtende Zusammensetzung zeichnet sich dadurch aus, dass sie mittels Feuchtigkeit so aushärtet, dass das dabei entstehende Material in Abhängigkeit der Verfügbarkeit von Feuchtigkeit in sich variierende mechanische Eigenschaften aufweisen kann. Innerhalb des Materials können, je nach Aushärtungsbedingungen, Bereiche mit unterschiedlichem Verformungsverhalten von vorwiegend elastisch bis vorwiegend plastisch vorliegen, die graduell ineinander übergehen. Insbesondere härtet die Zusammensetzung derart aus, dass die mit Feuchtigkeit unmittelbar in Kontakt stehenden Bereiche - eine der Luft zugewandte Schicht, oder eine auf einem feuchtedurchlässigen oder Feuchtigkeit abgebenden Substrat liegende Schicht - zu einem Material mit vorwiegend elastischen Eigenschaften aushärten, während die mit Feuchtigkeit nur mittelbar, insbesondere über Diffusionseffekte durch Nachbarbereiche hindurch, in Kontakt stehende Bereiche - im Innern liegende Schichten, oder auf feuchteundurchlässigen und keine Feuchtigkeit abgebenden Substraten liegende Schichten - zu einem Material mit mehr oder weniger plastischen Eigenschaften aushärten, wobei das Ausmass der Plastizität eines Materialbereichs mit dessen zunehmendem Abstand von der Feuchtigkeitsquelle zunimmt. Bezüglich des mechanischen Verhaltens entsteht so aus einem vor der Aushärtung isotropen Material durch Reaktion mit Feuchtigkeit von aussen nach innen ein anisotropes Material.

Dieses zu anisotropen Materialeigenschaften führende Aushärtungsverhalten ist überraschend. Eine mögliche Erklärung dafür, welche jedoch nicht die Erfindung beschränken soll, ist die Hypothese, dass der aus der Hydrolyse des Organoalkoxysilans **OS** freigesetzte Alkohol bevorzugt nach innen in noch nicht ausgehärtete Materialschichten diffundiert, anstatt durch die bereits ausgehärtete Materialschicht nach aussen zu diffundieren und von dort zu verdampfen; dadurch können Isocyanatgruppen im Innern der applizierten Zusammensetzung vermehrt mit Alkohol reagieren, bevor sie mit hydrolysierenden Aldiminogruppen und/oder Feuchtigkeit in Kontakt kommen, und so zu einem eher plastischen Material führen.

Das Auftreten des beschriebenen Aushärtungsverhaltens kann dazu ausgenützt werden, mittels geeigneter Steuerung der Feuchtigkeitszufuhr ein Material herzustellen, das - ähnlich einem gefüllten Wasserschlauch - einen vorwiegend elastischen Mantel und einen vorwiegend plastischen Kern besitzt.

Insbesondere wird aus der vorgängig im Detail beschriebenen einkomponentigen feuchtigkeitshärtenden Zusammensetzung durch Aushärtung mittels Luftfeuchtigkeit eine anisotrope Zusammensetzung mit einem vorwiegend elastischen Mantel und einem vorwiegend plastischen Kern erhalten.

Für die Ausbildung der beschriebenen anisotropen Materialeigenschaften ist es entscheidend, dass die wesentlichen Bestandteile der Zusammensetzung in aufeinander abgestimmten Mengenverhältnissen, wie sie durch die Verhältnisse **V1** und **V2** definiert werden, vorliegen.

So ist die für das Verhältnis **V1** vorgegebene Menge an Aldimin **A** notwendig, damit die Blasenbildung unterdrückt wird und sich eine elastische und widerstandsfähige Haut bildet. Wird weniger Aldimin **A** als vorgegeben eingesetzt, besteht die Gefahr der Blasenbildung und bildet sich eine dünne Haut; wird hingegen mehr Aldimin **A** als vorgegeben eingesetzt, bildet sich eine mechanisch schwache Haut; in beiden Fällen ist die ausgehärtete Zusammensetzung als Ganzes wenig widerstandsfähig.

Weiterhin ist die für das Verhältnis **V2** vorgegebene Menge an Organoalkoxysilan **OS** notwendig, damit bei der Aushärtung mittels Luftfeuchtigkeit im Innern genügend Kettenabbruchreaktionen stattfinden, um einen ausreichend grossen Kern mit vorwiegend plastischen Eigenschaften zu erhalten; wird weniger Organoalkoxysilan **OS** als vorgegeben eingesetzt, stellt sich keine bedeutende Anisotropie mehr ein; wird umgekehrt mehr Organoalkoxysilan OS als vorgegeben eingesetzt, so wird der Anteil des vorwiegend plastischen Materials im Innern sehr gross, die elastische Haut damit sehr dünn und die ausgehärtete Zusammensetzung als Ganzes wenig widerstandsfähig.

Schliesslich ist das Vorhandensein einer Säure **S** in der beschriebenen Zusammensetzung notwendig, um die Hydrolyse des Aldimins **A** zu beschleunigen und damit die Ausbildung der elastischen Haut zu ermöglichen.

Das Ausmass der beschriebenen anisotropen Materialeigenschaften ist ausserdem von der Schichtdicke und Geometrie der applizierten Zusammensetzung abhängig. Insbesondere ist es hierfür vorteilhaft, wenn die Zusammensetzung in genügend grosser Schichtdicke, typischerweise von mindestens einigen Millimetern, appliziert und ausgehärtet wird.

Ein Zinnkatalysator **Z** ist als Bestandteil der beschriebenen Zusammensetzung für die Erreichung von anisotropen Materialeigenschaften nicht unbedingt notwendig, da das vorhandene α-funktionelle Organoalkoxysilan **OS** bei Kontakt mit Feuchtigkeit so schnell Alkohol freisetzt, dass es auch ohne zusätzliche Katalyse mittels eines Zinnkatalysators **Z** zu einer deutlichen Blockierung der Isocyanatgruppen im Innern der Zusammensetzung und somit zu anisotroper Aushärtung kommt. Falls ein Zinnkatalysator **Z** verwendet wird, so ist es vorteilhaft, diesen in einer nicht zu hohen Menge einzusetzen, da sonst zum einen der Anteil des vorwiegend plastischen Materials im Innern sehr gross, die elastische Haut damit sehr dünn und die ausgehärtete Zusammensetzung als Ganzes wenig widerstandsfähig ist, und sich zum anderen sich die thermische Stabilität der ausgehärteten Zusammensetzung vermindert.

Falls die anisotropen Materialeigenschaften nicht erwünscht sind, kann die einkomponentige feuchtigkeitshärtende Zusammensetzung aber auch zu einem weitgehend oder vollständig isotropen Material ausgehärtet werden, insbesondere indem die Zusammensetzung bei der Applikation mit einer genügenden Menge Wasser im Wesentlichen homogen vermischt wird, beispielsweise indem mittels eines Statikmischers eine Wasser enthaltende Paste in die Zusammensetzung eingemischt wird. Dadurch ist Wasser in der ganzen Zusammensetzung in genügender Menge verfügbar, was dazu führt, dass die Zusammensetzung zu einem isotropen Material mit gesamthaft vergleichsweise hoher Festigkeit und Elastizität aushärtet.

Somit wird aus der vorgängig im Detail beschriebenen einkomponentigen feuchtigkeitshärtenden Zusammensetzung durch Aushärtung mittels im Wesentlichen homogen eingemischtem Wasser oder einer im Wesentlichen homogen eingemischten Wasser enthaltenden Komponente eine isotrope Zusammensetzung erhalten.

Die mechanischen Eigenschaften der Zusammensetzung lassen sich also nicht nur durch die Wahl und relativen Anteile der Bestandteile der Zusammensetzung, sondern auch durch die Art der Aushärtung in einem weiten Bereich variieren.

Die einkomponentige feuchtigkeitshärtende Zusammensetzung ist geeignet als Klebstoff, Dichtstoff, Vergussmasse oder Beschichtung.

Insbesondere geeignet ist sie für Anwendungen, bei welchen weichelastische oder dämpfende Eigenschaften gefordert sind, beispielsweise weichelastische Dichtstoffe für Bewegungsfugen an Bauwerken im Hoch- oder im Tiefbau, vibrationsdämpfende Dichtungen oder Beschichtungen an Geräten oder Motoren, oder Schlagschutzbeschichtungen, beispielsweise als Unterbodenschutz für Fahrzeuge.

Speziell geeignet ist die einkomponentige feuchtigkeitshärtende Zusammensetzung als weichelastischer Dichtstoff für Bewegungsfugen an Bauwerken auf diffusionsoffenen Untergründen wie insbesondere Holz, Beton, Mörtel, Backstein, Ziegel, Gips und Natursteinen wie Granit oder Marmor sowie porösen Kunststoffen. Aufgrund der anisotropen Materialeigenschaften weisen solche Fugen vorteilhafte Eigenschaften auf wie insbesondere eine robuste, klebfreie Oberfläche, ein gutes Rückstellvermögen und tiefe Werte für die Dehnspannung bei 23 °C und bei -20 °C.

Hierbei ist besonders vorteilhaft, dass mit einem Material mit einer klebfreien Oberfläche 100%-Dehnspannungen von ≤ 0.4 MPa bei Raumtemperatur und. ≤ 0.6 MPa bei -20 °C, erzielt werden können, wie das für einen weichelastischen Fugendichtstoff für den Hochbau der Klasse 25LM nach EN ISO 11600 gefordert ist.

Ein weiterer Aspekt der vorliegenden Erfindung betrifft ein Verfahren zum Verkleben von einem Substrat **S1** mit einem Substrat **S2,** welches die Schritte umfasst:
α) Applikation der vorgängig im Detail beschriebenen Zusammensetzung auf ein Substrat **S1;**
β) Kontaktieren der applizierten Zusammensetzung mit einem Substrat **S2** innerhalb der Offenzeit der Zusammensetzung;
oder
α') Applikation der vorgängig im Detail beschriebenen Zusammensetzung auf ein Substrat **S1** und auf ein Substrat **S2;**
β') Kontaktieren der applizierten Zusammensetzung miteinander innerhalb der Offenzeit der Zusammensetzung;
wobei das Substrat **S2** aus dem gleichen oder einem unterschiedlichen Material wie das Substrat **S1** besteht.

Als Offenzeit wird dabei die Zeit verstanden, innerhalb welcher sich noch keine Haut auf der Oberfläche der applizierten Zusammensetzung gebildet hat. Dies kann auch als Hautbildungszeit bezeichnet werden.

Ein weiterer Aspekt der vorliegenden Erfindung betrifft ein Verfahren zum Abdichten. Dieses umfasst den Schritt:
α") Applikation der vorgängig im Detail beschriebenen Zusammensetzung zwischen ein Substrat **S1** und ein Substrat **S2,** so dass die Zusammensetzung mit dem Substrat **S1** und dem Substrat **S2** in Kontakt steht;
wobei das Substrat **S2** aus dem gleichen oder einem unterschiedlichen Material wie das Substrat **S1** besteht.

Üblicherweise wird der Dichtstoff in eine sogenannte Fuge eingepresst.

Ein weiterer Aspekt der vorliegenden Erfindung betrifft ein Verfahren zum Beschichten eines Substrates **S1.** Dieses umfasst den Schritt:
α"') Applikation der vorgängig im Detail beschriebenen Zusammensetzung auf ein Substrat **S1.**

In diesen Verfahren sind geeignete Substrate **S1** und/oder **S2** insbesondere
- Glas, Glaskeramik, Beton, Mörtel, Backstein, Ziegel, Gips und Natursteine wie Granit oder Marmor;
- Metalle oder Legierungen wie Aluminium, Stahl, Eisen, Buntmetalle, verzinkte Metalle;
- Leder, Textilien, Papier, Holz, mit Harz gebundene Holzwerkstoffe, Harz-Textil-Verbundwerkstoffe und weitere sogenannte Polymer-Composites,
- Kunststoffe wie Polyvinylchlorid (Hart- und Weich-PVC), AcrylonitrilButadien-Styrol-Copolymere (ABS), SMC (Sheet Moulding Compounds), Polycarbonat (PC), Polyamid (PA), Polyester, Poly(methylmethacrylat) (PMMA), Polyester, Epoxidharze, Polyurethane (PUR), Polyoxymethylen (POM), Polyolefine (PO), Polyethylen (PE) oder Polypropylen (PP), Ethylen/Propylen-Copolymere (EPM) und Ethylen/Propylen/Dien-Terpolymere (EPDM), wobei die Kunststoffe bevorzugt mittels Plasma, Corona oder Flammen oberflächenbehandelt sein können;
- beschichtete Substrate wie pulverbeschichtete Metalle oder Legierungen; sowie Farben und Lacke.

Speziell bevorzugt ist ein Verfahren zum Abdichten von gegenüber Feuchtigkeit diffusionsoffenen Substraten **S1** und/oder **S2.** Insbesondere sind dies Substrate wie Holz, Beton, Mörtel, Backstein, Ziegel, Gips und Natursteine wie Granit oder Marmor sowie poröse Kunststoffe.

Die Substrate können bei Bedarf vor dem Applizieren der Zusammensetzung vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln oder das Aufbringen eines Haftvermittlers, einer Haftvermittlerlösung oder eines Primers.

Die Applikation der Zusammensetzung kann in einem breiten Temperaturspektrum erfolgen. Insbesondere wird die Zusammensetzung bei Raumtemperatur appliziert. Die Zusammensetzung kann aber auch bei tieferen wie auch bei höheren Temperaturen appliziert werden.

Aus diesen beschriebenen Verfahren zum Verkleben, Abdichten bzw. Beschichten - beziehungsweise aus der Verwendung der vorgängig im Detail beschriebenen Zusammensetzung als Klebstoff, Dichtstoff, Vergussmasse oder Beschichtung - entsteht ein Artikel.

Dieser Artikel ist insbesondere ein Bauwerk, insbesondere ein Bauwerk des Hoch- oder Tiefbaus, oder ein industrielles Gut oder ein Konsumgut, insbesondere ein Fenster, eine Haushaltmaschine, oder ein Transportmittel, insbesondere ein Fahrzeug zu Wasser oder zu Lande, bevorzugt ein Automobil, ein Bus, ein Lastkraftwagen, ein Zug oder ein Schiff, oder ein Anbauteil eines Transportmittels, oder ein Artikel der Möbel-, Textil- oder Verpackungsindustrie.

Die beschriebene Zusammensetzung weist vorzugsweise eine pastöse Konsistenz mit strukturviskosen Eigenschaften auf. Eine solche pastöse Zusammensetzung wird in der Anwendung als Klebstoff oder Dichtstoff mittels einer geeigneten Vorrichtung appliziert. Geeignete Methoden zum Auftragen eines pastösen Klebstoffs oder Dichtstoffs sind beispielsweise die Applikation aus handelsüblichen Kartuschen, welche bevorzugt manuell betrieben werden. Eine Applikation mittels Druckluft aus einer handelsüblichen Kartusche oder aus einem Fass oder Hobbock mittels einer Förderpumpe oder eines Extruders, gegebenenfalls mittels eines Applikations-Roboters, ist ebenfalls möglich.

### Beispiele

### 1. Beschreibung der Messmethoden

Die Viskosität wurde auf einem thermostatisierten Kegel-Platten-Viskosimeter Physica UM (Kegeldurchmesser 20 mm, Kegelwinkel 1 °, Kegelspitze-Platten-Abstand 0.05 mm, Schergeschwindigkeit 10 bis 1000 s⁻¹) gemessen.

Der **Amingehalt,** das heisst der totale Gehalt an Aldiminogruppen und freien Aminogruppen in den hergestellten Verbindungen, wurde titrimetrisch bestimmt (mit 0.1N HClO₄ in Eisessig, gegen Kristallviolett) und ist stets angegeben in mmol N/g.

### 2. Herstellung von Aldiminen

### Aldimin A-1

In einem Rundkolben wurden unter Stickstoffatmosphäre 55.0 g (0.19 mol) destilliertes 2,2-Dimethyl-3-lauroyloxy-propanal vorgelegt. Unter kräftigem Rühren wurden aus einem Eintropftrichter 15.6 g (0.18 mol N) 1-Amino-3-aminomethyl-3,5,5-trimethylcyclohexan (= Isophorondiamin, IPDA; Vestamin^{®} IPD, Degussa; Amingehalt 11.68 mmol N/g) langsam zugegeben. Danach wurden die flüchtigen Bestandteile im Vakuum entfernt (10 mbar, 80°C). Ausbeute: 67.1 g eines klaren, farblosen Öls mit einem Amingehalt von 2.73 mmol N/g und einer Viskosität von 190 mPa·s bei 20 °C.

### 3. Herstellung von Zusammensetzungen

### Beispiele 1 bis 4 sowie Vergleichsbeispiele 5 bis 8

Für jedes Beispiel wurden die jeweiligen Bestandteile gemäss Tabelle 1 in den angegebenen Gewichtsteilen ohne vorherige Trocknung in einem Vakuummischer unter Feuchtigkeitsausschluss zu einer homogenen Paste verarbeitet, diese unverzüglich in eine innenlackierte Aluminium-Kartusche abgefüllt und die Kartusche luftdicht verschlossen.

Als *TDI* wurde (Toluylendiisocyanat) wurde Desmodur^{®} T 80 P von Bayer eingesetzt.

Silane wurden die Folgenden eingesetzt:

| | |
|---|---|
| *XL63*: | N-(Trimethoxysilylmethyl)-O-methyl-carbamat (Geniosil^{®} XL 63, Wacker Chemie), |
| *XL33*: | (Methacryloxymethyl)trimethoxysilan (Geniosil^{®} XL 33, Wacker Chemie), |
| *XL36*: | (Methacryloxymethyl)triethoxysilan (Geniosil^{®} XL 36, Wacker Chemie), |
| *TEO*: | Tetraethoxysilan (= Tetraethylorthosilicat) (ABCR GmbH), |
| *TMS:* | Tetramethoxysilan (= Tetramethylorthosilicat) (ABCR GmbH), |
| *A187*: | 3-Glycidoxypropyltrimethoxysilan (Silquest^{®} A-187, Momentive Performance Materials). |

Das Polymer ***P-1*** wurde wie folgt hergestellt:
3080 g Polyoxypropylen-Diol (Acclaim^{®} 4200 N, Bayer; OH-Zahl 28.1 mg KOH/g), 1540 g Polyoxypropylenpolyoxyethylen-Triol (Caradol^{®} MD34-02, Shell; OH-Zahl 35.0 mg KOH/g) und 385 g Toluylendiisocyanat (TDI; Desmodur^{®} T 80 P, Bayer) wurden bei 80 °C zu einem NCO-terminierten Polyurethanpolymeren mit einem titrimetrisch bestimmten Gehalt an freien Isocyanat-Gruppen von 1.53 Gew.-% umgesetzt.

Das Polymer ***P-2*** wurde wie folgt hergestellt:
590 g Polyoxypropylen-Diol (Acclaim^{®} 4200 N, Bayer; OH-Zahl 28.1 mg KOH/g), 1180 g Polyoxypropylenpolyoxyethylen-Triol (Caradol^{®} MD34-02, Shell; OH-Zahl 35.0 mg KOH/g) und 230 g Isophorondiisocyanat (IPDI; Vestanat^{®} IPDI, Degussa) wurden nach bekanntem Verfahren bei 80 °C zu einem NCO-terminierten Polyurethanpolymeren mit einem titrimetrisch bestimmten Gehalt an freien Isocyanat-Gruppen von 2.10 Gew.-% umgesetzt.

Das *Verdickungsmittel* wurde wie folgt hergestellt:
In einem Vakuummischer wurden 3000 g Diisodecylphthalat (DIDP; Palatinol^{®} Z, BASF) und 480 g 4,4'-Methylendiphenyldiisocyanat (MDI, Desmodur^{®} 44 MC L, Bayer) vorgelegt und leicht aufgewärmt. Dann wurden unter starkem Rühren 270 g Monobutylamin langsam zugetropft. Die entstehende Paste wurde unter Vakuum und Kühlung eine Stunde weitergerührt.

**Tabelle 1: Zusammensetzung der Dichtstoffe. ^{a} 5 Gew.-% in Dioctyladipat.**

| Beispiel | **1** | **2** | **3** | **4** | **5 (Vgl.)** | **6 (Vgl.)** | **7 (Vgl.)** | **8 (Vgl.)** |
|---|---|---|---|---|---|---|---|---|
| Polymer ***P-1*** | 16.00 | 16.00 | 16.00 | 16.00 | 16.00 | 16.00 | 16.00 | 16.00 |
| Polymer ***P-2*** | 8.00 | 8.00 | 8.00 | 8.00 | 8.00 | 8.00 | 8.00 | 8.00 |
| Dialdimin | ***A-1,*** 3.18 | ***A-1,*** 3.18 | ***A-1,*** 2.11 | ***A-1,*** 2.11 | **-** | ***A-1,*** 3.18 | ***A-1,*** 3.18 | **-** |
| Diisodecylphtalat | 0.87 | 0.85 | 1.05 | 2.04 | 4.05 | 0.96 | 0.82 | 4.05 |
| Kreide | 38.00 | 38.00 | 38.00 | 38.00 | 38.00 | 38.00 | 38.00 | 38.00 |
| *Verdickungsmittel* | 28.00 | 28.00 | 28.00 | 28.00 | 28.00 | 28.00 | 28.00 | 28.00 |
| Titandioxid | 4.50 | 4.50 | 4.50 | 4.50 | 4.50 | 4.50 | 4.50 | 4.50 |
| *TDI* | 0.40 | 0.40 | 0.40 | 0.40 | 0.40 | 0.40 | 0.40 | 0.40 |
| Organoalkoxysilan | *XL63,* 0.35 | *XL33*, 0.37 | *XL36*, 0.44 | *XL63*, 0.15 | *XL63,* 0.35 | *TEO,* 0.26 | *A187,* 0.40 | *XL63*, 0.35 |
| Salicylsäure^{a} | 0.60 | 0.60 | 0.60 | 0.60 | 0.60 | 0.60 | 0.60 | 0.60 |
| Dibutylzinndilaurat^{a} | 0.10 | 0.10 | 0.80 | 0.10 | 0.10 | 0.10 | 0.10 | 0.10 |
| Verhältnis **V1** [Aldimin/NCO] | 0.60 | 0.60 | 0.40 | 0.40 | 0 | 0.60 | 0.60 | 0 |
| Verhältnis **V2** [Alkoxy/NCO] | 0.35 | 0.35 | 0.35 | 0.15 | 0.35 | 0.35 | 0.35 | 0.35 |

Die so erhaltenen Dichtstoffe wurden auf Applikationseigenschaften, Aushärtungsverhalten und Eigenschaften nach der Aushärtung geprüft.

Als Mass für die Applikationseigenschaften wurden die Standfestigkeit und der Fadenzug herangezogen. Zur Bestimmung der **Standfestigkeit** wurde der Dichtstoff mittels Kartuschenpistole über eine Dreiecksdüse als waagrecht verlaufende Dreiecksraupe mit einem Basisdurchmesser von 8 mm und einer Höhe (Abstand der Dreiecksspitze von der Basis) von 20 mm auf ein senkrecht stehendes Stück Pappkarton aufgetragen. Nach 5 Minuten wurde gemessen, wie weit sich die Spitze abgesenkt, d.h. von der ursprünglichen Position in der Mitte der Dreiecksraupe wegbewegt, hatte. Als "sehr gut" (= "s.gut") wurde bewertet, wenn sich die Spitze in vollständig oder annährend unveränderter Position befand, als "gut", wenn die Spitze sich zwischen Mitte und Basisende befand. Der **Fadenzug** wurde qualitativ bestimmt, indem etwas Dichtstoff mittels Kartuschenpistole auf ein an der Wand befestigtes Stück Pappkarton aufgetragen wurde, die Kartuschenpistole beim Auftragsende durch rasches Zurückziehen vom aufgetragenen Dichtstoff weggezogen und die Länge des dabei an der Abrissstelle zurückbleibenden Fadens gemessen wurde.

Zur Prüfung des Aushärtungsverhaltens wurde zum einen die Zeit bis zur **Hautbildung** (Zeit bis zur Klebefreiheit, "tack-free time") herangezogen. Dazu wurden einige Gramm des raumtemperaturwarmen Dichtstoffs in einer Schichtdicke von ca. 2 mm auf Pappkarton aufgetragen und im Normklima (23±1 °C und 50±5% relative Luftfeuchtigkeit) die Zeit bestimmt, die es dauerte, bis beim leichten Antippen der Oberfläche des Dichtstoffs mittels einer Pipette aus LDPE erstmals keine Rückstände auf der Pipette mehr zurückblieben. Weiterhin wurde der Dichtstoff qualitativ auf **Klebrigkeit** hin geprüft, indem man mit dem Daumen nach einem Tag auf den aushärtenden Shore A-Prüfkörper (siehe unten) drückte und danach feststellte, wie lange der Prüfkörper beim Anheben der Hand am Daumen kleben blieb. Die Klebrigkeit wurde darauf als hoch (Prüfkörper bleibt mehr als 3 Sekunden lang kleben), mittel (Prüfkörper bleibt etwa 3 Sekunden lang kleben), gering (Prüfkörper bleibt 1 bis 2 Sekunden lang kleben) und keine (Prüfkörper bleibt weniger als 1 Sekunde lang kleben) bewertet. Des weiteren wurde der Dichtstoff optisch auf **Blasenbildung** während der Aushärtung beurteilt. Schliesslich wurde der Dichtstoff auf **Anisotropie** der Materaleigenschaften geprüft. Dazu wurde der raumtemperaturwarme Dichtstoff mittels Kartuschenpistole durch eine Rundspitze (Öffnung 10 mm) als waagrechter Konus mit einer Länge von ca. 50 mm und einem Durchmesser an der Basis von 30 mm auf ein an der Wand befestigtes Stück Pappkarton aufgetragen, während 14 Tagen im Normklima belassen, dann horizontal, im Abstand von 1 cm von der Basis, abgeschnitten und die Schnittfläche optisch und durch Eindrücken eines Spatels an verschiedenen Stellen qualitativ daraufhin beurteilt, ob das Material in den äusseren Schichten anders ist als in den inneren Schichten, indem es einen graduellen Übergang von elastischem zu plastischem Charakter zeigt (Anisotropie = "ja"), oder ob das Material an allen Stellen ähnlich ist (Anisotropie = "nein"). Mit "(ja)" wird angezeigt, dass das Material nur sehr geringfügig anisotrope Eigenschaften aufweist, d.h. nur ein sehr kleiner plastischer Kern vorliegt. Beim Vorliegen von anisotropen Materialeigenschaften wurde die Dicke der zumindest partiell elastischen Haut **("Hautdicke")** approximativ mit einem Massstab bestimmt. Wird als Hautdicke der Wert "(15)" angegeben, so bedeutet dies, dass das Material vollständig isotrope Eigenschaften aufweist, die elastische "Haut" sich also durch den ganzen Querschnitt des Konus fortsetzt und deshalb formal eine Dicke von 15 mm aufweist.

Die **Shore A-Härte** wurde bestimmt nach DIN 53505 an während 14 Tagen im Normklima ausgehärteten Prüfkörpern (in der Tabelle 3 mit "Shore A" bezeichnet). Die **100%-Dehnspannung** (= "Dehnsp.") wurde jeweils bei 23 °C sowie bei -20 °C nach DIN EN 28339 bestimmt (mit Betonprüfkörpern, vorbehandelt mit Sika^{®} Primer-3N, Verfahren A) (in der Tabelle 3 mit "Dehnsp." bezeichnet). Das **Rückstellvermögen** (= "Rückstell.") wurde bestimmt in Anlehnung an DIN EN 27389, wobei anstelle von Aluminiumprofilen Betonprüfkörper verwendet wurden (vorbehandelt mit Sika^{®} Primer-3N, Verfahren A, Dehnung um 100 %) (in der Tabelle 3 mit "Rückstell." bezeichnet). Die Haftung und Intaktheit der **Fuge nach Dauerdehnung** wurde geprüft nach DIN EN 28340 (Verfahren A, Betonprüfkörper, vorbehandelt mit Sika^{®} Primer-3N, Dehnung um 100 %).

Die Ergebnisse der Prüfungen sind in der Tabelle 2 aufgeführt.

Aus der Tabelle 2 ist ersichtlich, dass die erfindungsgemässen Dichtstoffe der Beispiele 1 bis 4 blasenfrei aushärten und ausgeprägt anisotrope Materialeigenschaften aufweisen. Sie bilden dabei eine weitgehend klebefreie Oberfläche und eine ausreichend dicke elastische Haut, so dass sie die Dauerdehnung ohne Beschädigungen überstehen (sofern diese Prüfung durchgeführt wurde). Die 100%-Dehnspannung beträgt (sofern diese Prüfung durchgeführt wurde) ≤ 0.4 MPa bei Raumtemperatur und ≤ 0.6 MPa bei -20 °C, wie das für einen weichelastischen Fugendichtstoff für den Hochbau der Klasse 25LM nach EN ISO 11600 gefordert ist. Die Dichtstoffe der Vergleichsbeispiele unterscheiden sich davon deutlich: die Vergleichsbeispiele 5 bis 7 mit anderen Alkoxysilanen zeigen keine oder nur eine geringfügige Anisotropie und weisen entsprechend deutlich höhere 100%-Dehnspannung auf; Vergleichsbeispiel 8 ohne Aldimin zeigt zwar stark anisotrope Materialeigenschaften, bildet aber nur eine sehr dünne und stark klebrige "Haut" und weist ungenügende mechanische Eigenschaften auf.

**Tabelle 2: Eigenschaften der Dichtstoffe. n.b. = nicht bestimmt n.m. = nicht gemessen (Dichtstoff zu plastisch und klebrig) V = Versagen: Betonbruch kV = kein Versagen**

| Beispiel | **1** | **2** | **3** | **4** | **5 (Vgl.)** | **6 (Vgl.)** | **7 (Vgl.)** | **8 (Vgl.)** |
|---|---|---|---|---|---|---|---|---|
| Standfestigkeit | s. gut | s. gut | s. gut | s. gut | s. gut | s. gut | gut | gut |
| Fadenzug (cm) | 3 | 3 | 3 | 3 | 3 | 6 | 3 | 4 |
| Hautbildung (min) | 105 | 80 | 75 | 95 | 100 | 105 | 95 | 480 |
| Klebrigkeit | keine | keine | keine | keine | keine | keine | keine | hoch |
| Blasenbildung | keine | keine | keine | keine | keine | keine | keine | einige |
| Anisotropie | ja | ja | ja | ja | (ja) | nein | nein | ja |
| Hautdicke (mm) | 3 | 2 | 3 | 7 | 12 | (15) | (15) | <1 |
| Shore A RT | 25 | 26 | 24 | 29 | 35 | 40 | 42 | 20 |
| Shore A -20 °C | 39 | 38 | 38 | 38 | 48 | 52 | 52 | 26 |
| 100%-Dehnsp. bei 23 °C (MPa) | 0.2 | 0.3 | n.b. | n.b. | n.b. | 0.8 | 0.7 | n.m. |
| 100%-Dehnsp. bei -20 °C (MPa) | 0.6 | 0.6 | n.b. | n.b. | n.b. | 1.4 | 1.1 | n.m. |
| Rückstell. (%) 23 °C / -20 °C | 65/83 | 71/86 | nb. | nb. | nb. | V | V | n.m. |
| Fuge nach Dauerdehnung | kV | kV | n.b. | n.b. | n.b. | kV | kV | n.m. |

## Patentansprüche

1. Einkomponentige feuchtigkeitshärtende Zusammensetzung umfassend
a) mindestens ein Polyisocyanat **P;**
b) mindestens ein Aldimin **A** der Formel (I), 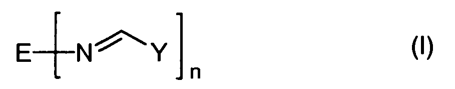 wobei
n für 2 oder 3 oder 4 steht,
E für den organischen Rest eines n-wertigen Amins **B** nach Entfernung von n primären Aminogruppen steht, und
Y für einen einwertigen Kohlenwasserstoffrest mit 1 bis 35 C-Atomen, der gegebenenfalls mindestens ein Heteroatom enthält, steht,
c) mindestens ein Organoalkoxysilan **OS,** welches mindestens eine Gruppierung der Formel (VI) aufweist, 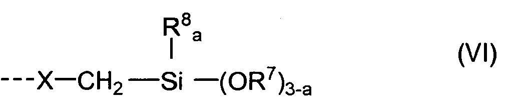 wobei
a für 0 oder 1 oder 2, bevorzugt für 0 oder 1, steht,
R⁷ für einen Alkylrest mit 1 bis 5 C-Atomen, insbesondere für einen Methyl- oder Ethylrest, steht,
R⁸ für einen Alkylrest mit 1 bis 8 C-Atomen, insbesondere für einen Methylrest, steht und
X für ein Sauerstoffatom oder für ein substituiertes Stickstoffatom steht,
d) mindestens eine Säure **S**;
mit den Massgaben, dass in der Zusammensetzung
(i) das Verhältnis **V1** zwischen der Anzahl Aldiminogruppen und der Anzahl Isocyanatgruppen im Bereich von 0.2 bis 0.8 liegt, und dass
(ii) das Verhältnis **V2** zwischen der Anzahl Alkoxygruppen des Organoalkoxysilans **OS** und der Anzahl Isocyanatgruppen im Bereich von 0.1 bis 0.5 liegt.

2. Einkomponentige feuchtigkeitshärtende Zusammensetzung gemäss Anspruch 1, **dadurch gekennzeichnet, dass** das Aldimin **A** der Formel (I) die Formel (Ia) oder (Ib) aufweist, 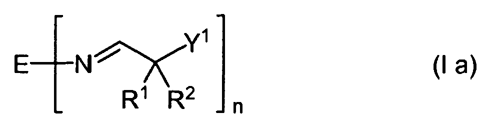 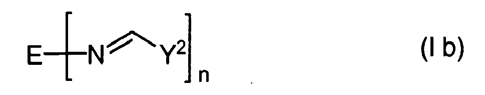 wobei
R¹ und R² entweder unabhängig voneinander jeweils für einen einwertigen Kohlenwasserstoffrest mit 1 bis 12 C-Atomen stehen,
oder
zusammen für einen zweiwertigen Kohlenwasserstoffrest mit 4 bis 12 C-Atomen, der Teil eines, gegebenenfalls substituierten, carbocyclischen Rings mit 5 bis 8, bevorzugt 6, C-Atomen ist, stehen;
Y¹ für einen einwertigen Kohlenwasserstoffrest mit 1 bis 32 C-Atomen steht, welcher gegebenenfalls mindestens ein Heteroatom, insbesondere Sauerstoff in der Form von Ether-, Carbonyl- oder Ester-Gruppen aufweist; und
Y² entweder
für einen substituierten oder unsubstituierten Aryl- oder Heteroaryl-Rest, welcher eine Ringgrösse von 5 bis 8, bevorzugt 6, Atomen aufweist, steht,
oder für 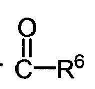 steht, wobei R⁶ für ein Wasserstoffatom oder für einen Alkoxyrest steht, oder für einen substituierten oder unsubstituierten Alkenyl- oder Arylalkenylrest mit mindestens 6 C-Atomen steht.

3. Einkomponentige feuchtigkeitshärtende Zusammensetzung gemäss Anspruch 2, **dadurch gekennzeichnet, dass** R¹ und R² jeweils für eine Methylgruppe stehen.

4. Einkomponentige feuchtigkeitshärtende Zusammensetzung gemäss Anspruch 2 oder 3, **dadurch gekennzeichnet, dass** Y¹ für einen Rest der Formel (II) oder (III) steht, 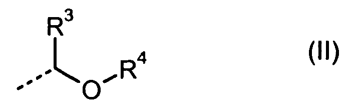 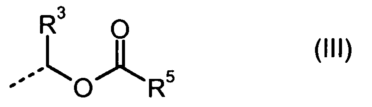 wobei
R³ für ein Wasserstoffatom oder für einen Alkyl-, Cycloalkyl-, Arylalkyl- oder Alkoxycarbonylrest mit 1 bis 12 C-Atomen steht;
R⁴ für einen Kohlenwasserstoffrest mit 1 bis 30 C-Atomen, welcher gegebenenfalls Ethersauerstoffatome enthält, steht;
R⁵ entweder für ein Wasserstoffatom steht,
oder
für einen linearen oder verzweigten Alkylrest mit 1 bis 30 C-Atomen, gegebenenfalls mit cyclischen Anteilen und gegebenenfalls mit mindestens einem Heteroatom, insbesondere Sauerstoff in der Form von Ether-, Carbonyl- oder Ester-Gruppen, steht,
oder
für einen einfach oder mehrfach ungesättigten, linearen oder verzweigten Kohlenwasserstoffrest mit 5 bis 30 C-Atomen steht,
oder
für einen, gegebenenfalls substituierten, aromatischen oder heteroaromatischen 5- oder 6-gliedrigen Ring steht.

5. Einkomponentige feuchtigkeitshärtende Zusammensetzung gemäss Anspruch 4, **dadurch gekennzeichnet, dass** R⁴ für einen Kohlenwasserstoffrest mit 6 bis 30, insbesondere mit 11 bis 30, C-Atomen, welcher gegebenenfalls Ethersauerstoffatome enthält, steht.

6. Einkomponentige feuchtigkeitshärtende Zusammensetzung gemäss einem der Ansprüche 4 oder 5, **dadurch gekennzeichnet, dass** R⁵
für einen linearen oder verzweigten Alkylrest mit 6 bis 30, insbesondere mit 11 bis 30, C-Atomen, gegebenenfalls mit cyclischen Anteilen und gegebenenfalls mit mindestens einem Heteroatom,
oder
für einen einfach oder mehrfach ungesättigten, linearen oder verzweigten Kohlenwasserstoffrest mit 6 bis 30, insbesondere mit 11 bis 30, C-Atomen,
bevorzugt für einen C₁₁-Alkylrest, steht.

7. Einkomponentige feuchtigkeitshärtende Zusammensetzung gemäss einem der vorhergehenden Ansprüche, **dadurch gekennzeichnet, dass** das Amin **B** ausgewählt ist aus der Gruppe bestehend aus 1,6-Hexamethylendiamin, 1,5-Diamino-2-methylpentan (MPMD), 1,3-Pentandiamin (DAMP), 1-Amino-3-aminomethyl-3,5,5-trimethylcyclohexan (= Isophorondiamin oder IPDA), 2,2,4- und 2,4,4-Trimethylhexamethylendiamin (TMD), 1,3-Xylylendiamin, 1,3-Bis-(aminomethyl)cyclohexan, Bis-(4-aminocyclohexyl)-methan, Bis-(4-amino-3-methylcyclohexyl)-methan, 3(4),8(9)-Bis-(aminomethyl)-tricyclo[5.2.1.0^{2,6}]decan, 1,2-, 1,3- und 1,4-Diaminocyclohexan, 1,4-Diamino-2,2,6-trimethylcyclohexan, 3,6-Dioxaoctan-1,8-diamin, 4,7-Dioxadecan-1,10-diamin, 4-Aminomethyl-1,8-octandiamin, Polyoxyalkylen-Polyaminen mit zwei oder drei Aminogruppen, 1,3- und 1,4-Phenylendiamin, 2,4- und 2,6-Toluylendiamin, 4,4'-, 2,4'- und 2,2'-Diaminodiphenylmethan, 3,3'-Dichlor-4,4'-diaminodiphenylmethan und Mischungen der genannten Polyamine.

8. Einkomponentige feuchtigkeitshärtende Zusammensetzung gemäss einem der vorhergehenden Ansprüche, **dadurch gekennzeichnet, dass** das Organoalkoxysilan **OS** mindestens eine Gruppierung der Formel (VI), bei welcher a für null oder 1 steht und R⁷ für einen Methylrest stehen, aufweist.

9. Einkomponentige feuchtigkeitshärtende Zusammensetzung gemäss einem der vorhergehenden Ansprüche, **dadurch gekennzeichnet, dass** das Organoalkoxysilan **OS** ausgewählt ist aus der Gruppe bestehend aus Methacryloxymethyl-trimethoxysilan, Methacryloxymethyl-dimethoxymethylsilan, Isocyanatomethyl-trimethoxysilan, Isocyanatomethyl-dimethoxymethylsilan, N-(Trimethoxysilylmethyl)-O-methyl-carbamat, N-(Dimethoxymethylsilylmethyl)-O-methyl-carbamat, N-Cyclohexyl-aminomethyl-trimethoxysilan, N-Cyclohexyl-aminomethyl-dimethoxymethylsilan, N-Phenyl-aminomethyl-trimethoxysilan, N-Phenyl-aminomethyl-dimethoxymethylsilan und α-silanfunktionellen Polymeren aus der Umsetzung von gegebenenfalls kettenverlängerten Polyetherpolyolen mit Isocyanatomethyl-trimethoxysilan oder Isocyanatomethyl-dimethoxymethylsilan; sowie den entsprechenden α-funktionellen Organoalkoxysilanen aus dieser Gruppe mit Ethoxy- anstelle der Methoxyreste.

10. Einkomponentige feuchtigkeitshärtende Zusammensetzung gemäss einem der vorhergehenden Ansprüche, **dadurch gekennzeichnet, dass** das Polyisocyanat **P** ein aromatische Isocyanatgruppen aufweisendes Polyurethanpolymer **PUP** ist.

11. Einkomponentige feuchtigkeitshärtende Zusammensetzung gemäss einem der vorhergehenden Ansprüche, **dadurch gekennzeichnet, dass** die Zusammensetzung weiterhin mindestens einen Zinnkatalysator **Z** in Form einer Dialkylzinn(IV)-Verbindung enthält.

12. Einkomponentige feuchtigkeitshärtende Zusammensetzung gemäss Anspruch 11, **dadurch gekennzeichnet, dass** der Zinnkatalysator **Z** in der Zusammensetzung in einer solchen Menge vorhanden ist, dass das Verhältnis zwischen der Anzahl Zinnatome aus dem Zinnkatalysator **Z** und der Anzahl Isocyanatgruppen den Wert von 0.005 unterschreitet.

13. Verfahren zum Verkleben von einem Substrat **S1** mit einem Substrat **S2** umfassend die Schritte
α) Applikation einer einkomponentigen feuchtigkeitshärtenden Zusammensetzung gemäss einem der Ansprüche 1 bis 12 auf ein Substrat **S1;**
β) Kontaktieren der applizierten Zusammensetzung mit einem Substrat **S2** innerhalb der Offenzeit der Zusammensetzung;
oder
α') Applikation einer einkomponentigen feuchtigkeitshärtenden Zusammensetzung gemäss einem der Ansprüche 1 bis 12 auf ein Substrat **S1** und auf ein Substrat **S2;**
β') Kontaktieren der applizierten Zusammensetzung miteinander innerhalb der Offenzeit der Zusammensetzung;
wobei das Substrat **S2** aus dem gleichen oder einem unterschiedlichen Material wie das Substrat **S1** besteht.

14. Verfahren zum Abdichten umfassend den Schritt
α") Applikation einer einkomponentigen feuchtigkeitshärtenden Zusammensetzung gemäss einem der Ansprüche 1 bis 12 zwischen ein Substrat **S1** und ein Substrat **S2,** so dass die Zusammensetzung mit dem Substrat **S1** und dem Substrat **S2** in Kontakt steht;
wobei das Substrat **S2** aus dem gleichen oder einem unterschiedlichen Material wie das Substrat **S1** besteht.

15. Anisotrope Zusammensetzung mit einem vorwiegend elastischen Mantel und einem vorwiegend plastischen Kern, erhalten durch die Aushärtung einer einkomponentigen feuchtigkeitshärtenden Zusammensetzung gemäss einem der Ansprüche 1 bis 12 mittels Luftfeuchtigkeit.

16. Isotrope Zusammensetzung erhalten durch die Aushärtung einer einkomponentigen feuchtigkeitshärtenden Zusammensetzung gemäss einem der Ansprüche 1 bis 12 mittels im Wesentlichen homogen eingemischtem Wasser oder einer im Wesentlichen homogen eingemischten Wasser enthaltenden Komponente.

## Claims

1. One-pack moisture-curing composition comprising
a) at least one polyisocyanate **P;**
b) at least one aldimine **A** of the formula (I) 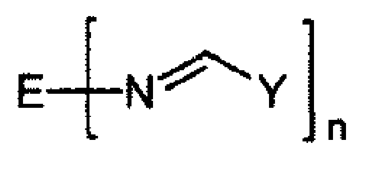 where
n is 2 or 3 or 4,
E is the organic radical of an n-functional amine **B** after removal of n primary amino groups, and
Y is a monovalent hydrocarbyl radical which has 1 to 35 carbon atoms and optionally contains at least one heteroatom,
c) at least one organoalkoxysilane **OS** which has at least one moiety of the formula (VI) 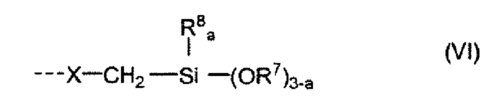 where
a is 0 or 1 or 2, preferably 0 or 1,
R⁷ is an alkyl radical having 1 to 5 carbon atoms, especially a methyl or ethyl radical,
R⁸ is an alkyl radical having 1 to 8 carbon atoms, especially a methyl radical, and
X is an oxygen atom or a substituted nitrogen atom,
d) at least one acid **S;**
with the provisos that, in the composition,
(i) the ratio **V1** between the number of aldimino groups and the number of isocyanate groups is in the range from 0.2 to 0.8, and that
(ii) the ratio **V2** between the number of alkoxy groups of the organoalkoxysilane **OS** and the number of isocyanate groups is in the range from 0.1 to 0.5.

2. One-pack moisture-curing composition according to Claim 1, **characterized in that** the aldimine **A** of the formula (I) has the formula (Ia) or (Ib) 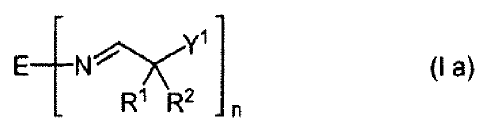 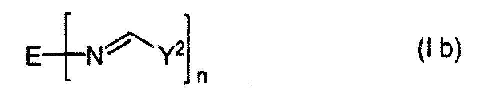 where
R¹ and R² are either each independently a monovalent hydrocarbyl radical having 1 to 12 carbon atoms,
or
together are a divalent hydrocarbyl radical which has 4 to 12 carbon atoms and is part of an optionally substituted carbocyclic ring having 5 to 8, preferably 6, carbon atoms;
Y¹ is a monovalent hydrocarbyl radical which has 1
to 32 carbon atoms and optionally has at least one heteroatom, especially oxygen in the form of ether, carbonyl or ester groups; and
Y² is either
a substituted or unsubstituted aryl or heteroaryl radical which has a ring size of 5 to 8, preferably 6, atoms,
or 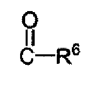 where R⁶ is a hydrogen atom or an alkoxy radical, or a substituted or unsubstituted alkenyl or arylalkenyl radical having at least 6 carbon atoms.

3. One-pack moisture-curing composition according to Claim 2, **characterized in that** R¹ and R² are each a methyl group.

4. One-pack moisture-curing composition according to Claim 2 or 3, **characterized in that** Y¹ is a radical of the formula (II) or (III) 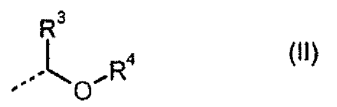 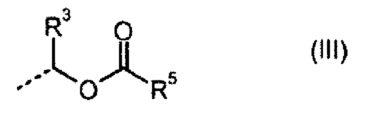 where
R³ is a hydrogen atom or an alkyl, cycloalkyl, arylalkyl or alkoxycarbonyl radical having 1 to 12 carbon atoms;
R⁴ is a hydrocarbyl radical which has 1 to 30 carbon atoms and optionally contains ether oxygen atoms;
R⁵ is
a hydrogen atom,
or
a linear or branched alkyl radical having 1 to 30 carbon atoms, optionally with cyclic components and optionally with at least one heteroatom, especially oxygen in the form of ether, carbonyl or ester groups,
or
a mono- or polyunsaturated, linear or branched hydrocarbyl radical having 5 to 30 carbon atoms,
or
an optionally substituted aromatic or heteroaromatic 5- or 6-membered ring.

5. One-pack moisture-curing composition according to Claim 4, **characterized in that** R⁴ is a hydrocarbyl radical which has 6 to 30, especially 11 to 30, carbon atoms and optionally contains ether oxygen atoms.

6. One-pack moisture-curing composition according to either of Claims 4 and 5, **characterized in that** R⁵ is a linear or branched alkyl radical having 6 to 30, especially having 11 to 30, carbon atoms, optionally with cyclic components and optionally with at least one heteroatom,
or
a mono- or polyunsaturated, linear or branched hydrocarbyl radical having 6 to 30, especially having 11 to 30, carbon atoms,
preferably a C₁₁-alkyl radical.

7. One-pack moisture-curing composition according to any of the preceding claims, **characterized in that** the amine **B** is selected from the group consisting of 1,6-hexamethylenediamine, 1,5-diamino-2-methylpentane (MPMD), 1,3-pentanediamine (DAMP), 1-amino-3-aminomethyl-3,5,5-trimethylcyclohexane (= isophoronediamine or IPDA), 2,2,4- and 2,4,4-trimethylhexamethylenediamine (TMD), 1,3-xylylenediamine, 1,3-bis(aminomethyl)-cyclohexane, bis(4-aminocyclohexyl)methane, bis(4-amino-3-methylcyclohexyl)methane, 3(4), 8(9)-bis(aminomethyl)tricyclo[5.2.1.0^{2'6}]decane, 1,2-, 1,3- and 1,4-diaminocyclohexane, 1,4-diamino-2,2,6-trimethylcyclohexane, 3,6-dioxaoctane-1,8-diamine, 4,7-dioxadecane-1,10-diamine, 4-aminomethyl-1,8-octanediamine, polyoxyalkylenepolyamines having two or three amino groups, 1,3-and 1,4-phenylenediamine, 2,4- and 2,6-tolylenediamine, 4,4'-, 2,4'- and 2,2'-diaminodiphenylmethane, 3,3'-dichloro-4,4'-diaminodiphenylmethane and mixtures of the polyamines mentioned.

8. One-pack moisture-curing composition according to any of the preceding claims, **characterized in that** the organoalkoxysilane **OS** has at least one moiety of the formula (VI) in which a is zero or 1 and R⁷ is a methyl radical.

9. One-pack moisture-curing composition according to any of the preceding claims, **characterized in that** the organoalkoxysilane **OS** is selected from the group consisting of methacryloyloxymethyltrimethoxysilane, methacryloyloxymethyldimethoxymethylsilane, isocyanatomethyltrimethoxysilane, isocyanatomethyldimethoxymethylsilane, N-(trimethoxysilylmethyl) 0-methyl carbamate, N-(dimethoxymethylsilylmethyl) 0-methyl carbamate, N-cyclohexylaminomethyltrimethoxysilane, N-cyclohexylaminomethyldimethoxymethylsilane, N-phenylamino-methyltrimethoxysilane, N-phenylaminomethyldi-methoxymethylsilane and α-silane-functional polymers from the reaction of optionally chain-extended polyether polyols with isocyanatomethyl-trimethoxysilane or isocyanatomethyldimethoxy-methylsilane; and the corresponding α-functional organoalkoxysilanes from this group with ethoxy in place of the methoxy radicals.

10. One-pack moisture-curing composition according to any of the preceding claims, **characterized in that** the polyisocyanate **P** is a polyurethane polymer **PUP** having aromatic isocyanate groups.

11. One-pack moisture-curing composition according to any of the preceding claims, **characterized in that** the composition further comprises at least one tin catalyst **Z** in the form of a dialkyltin(IV) compound.

12. One-pack moisture-curing composition according to Claim 11, **characterized in that** the tin catalyst **Z** is present in the composition in such an amount that the ratio between the number of tin atoms from the tin catalyst **Z** and the number of isocyanate groups is less than the value of 0.005.

13. Process for adhesive bonding a substrate **S1** to a substrate **S2,** comprising the steps of
α) applying a one-pack moisture-curing composition according to any of Claims 1 to 12 to a substrate **S1;**
β) contacting the composition applied with a substrate **S2** within the open time of the composition;
or
α') applying a one-pack moisture-curing composition according to any of Claims 1 to 12 to a substrate **S1** and to a substrate **S2;**
β') contacting the compositions applied with one another within the open time of the composition;
where the substrate **S2** consists of the same material as the substrate **S1** or a different material.

14. Process for sealing, comprising the step of
α") applying a one-pack moisture-curing composition according to any of Claims 1 to 12 between a substrate **S1** and a substrate **S2,** such that the composition is in contact with the substrate **S1** and the substrate **S2;**
where the substrate **S2** consists of the same material as the substrate **S1** or a different material.

15. Anisotropic composition having a predominantly elastic shell and a predominantly plastic core, obtained by the curing of a one-pack moisture-curing composition according to any of Claims 1 to 12 by means of air humidity.

16. Isotropic composition obtained by the curing of a one-pack moisture-curing composition according to any of Claims 1 to 12 by means of water mixed in essentially homogeneously, or of a pack comprising water mixed in essentially homogeneously.

## Revendications

1. Composition durcissant sous l'effet de l'humidité, à un composant, comprenant
a) au moins un polyisocyanate **P ;**
b) au moins une aldimine **A** de formule (I) 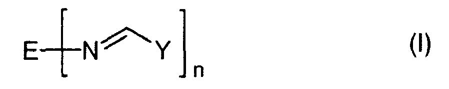 où
n vaut 2 ou 3 ou 4,
E représente le radical organique d'une amine **B** n-valente après l'élimination de n groupes amino primaires, et
Y représente un radical hydrocarboné monovalent comprenant 1 à 35 atomes de carbone, qui contient le cas échéant au moins un hétéroatome,
c) au moins un organoalcoxysilane **OS,** qui présente au moins un groupement de formule (VI) 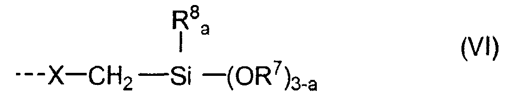 où
a vaut 0 ou 1 ou 2, de préférence 0 ou 1,
R⁷ représente un radical alkyle comprenant 1 à 5 atomes de carbone, en particulier un radical méthyle ou éthyle,
R⁸ représente un radical alkyle comprenant 1 à 8 atomes de carbone, en particulier un radical méthyle et
X représente un atome d'oxygène ou un atome d'azote substitué,
d) au moins un acide S ;
à condition que dans la composition
(i) le rapport **V1** entre le nombre de groupes aldimino et le nombre de groupes isocyanate se situe dans la plage de 0,2 à 0,8, et que
(ii) le rapport **V2** entre le nombre de groupes alcoxy de l'organoalcoxysilane **OS** et le nombre de groupes isocyanate se situe dans la plage de 0,1 à 0,5.

2. Composition durcissant sous l'effet de l'humidité, à un composant, selon la revendication 1, **caractérisée en ce que** l'aldimine **A** de formule (I) présente la formule (Ia) ou (Ib) 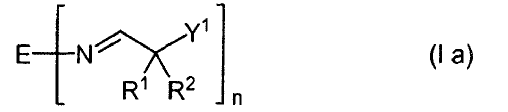 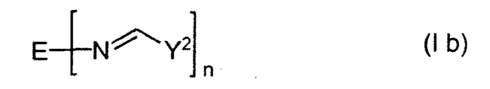 où
R¹ et R² représentent soit, indépendamment l'un de l'autre, à chaque fois un radical hydrocarboné monovalent comprenant 1 à 12 atomes de carbone,
soit ensemble un radical hydrocarboné divalent comprenant 4 à 12 atomes de carbone, qui fait partie d'un cycle carbocyclique, le cas échéant substitué, comprenant 5 à 8, de préférence 6, atomes de carbone ;
Y¹ représente un radical hydrocarboné monovalent comprenant 1 à 32 atomes de carbone, qui présente le cas échéant au moins un hétéroatome, en particulier d'oxygène sous forme de groupes éther, carbonyle ou ester ; et
Y² représente
soit un radical aryle ou hétéroaryle substitué ou non substitué, qui présente une taille de cycle entre 5 et 8, de préférence 6, atomes, soit 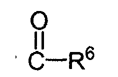 où R⁶ représente un atome d'hydrogène ou un radical alcoxy, ou un radical alcényle ou arylalcényle substitué ou non substitué comprenant au moins 6 atomes de carbone.

3. Composition durcissant sous l'effet de l'humidité, à un composant, selon la revendication 2, **caractérisée en ce que** R¹ et R² représentent chacun un groupe méthyle.

4. Composition durcissant sous l'effet de l'humidité, à un composant, selon la revendication 2 ou 3, **caractérisée en ce que** Y¹ représente un radical de formule (II) ou (III) 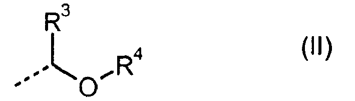 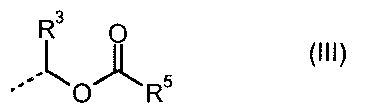 où
R³ représente un atome d'hydrogène ou un radical alkyle, cycloalkyle, arylalkyle ou alcoxycarbonyle comprenant 1 à 12 atomes de carbone ;
R⁴ représente un radical hydrocarboné comprenant 1 à 30 atomes de carbone, qui contient le cas échéant des atomes d'oxygène à fonction éther ;
R⁵ représente soit un atome d'hydrogène, soit un radical alkyle linéaire ou ramifié comprenant 1 à 30 atomes de carbone, le cas échéant avec des proportions cycliques et le cas échéant au moins un hétéroatome, en particulier de l'oxygène sous forme de groupes éther, carbonyle ou ester, soit un radical hydrocarboné linéaire ou ramifié, monoinsaturé ou polyinsaturé, comprenant 5 à 30 atomes de carbone, soit un cycle aromatique ou hétéroaromatique de 5 ou 6 chaînons, le cas échéant substitué.

5. Composition durcissant sous l'effet de l'humidité, à un composant, selon la revendication 4, **caractérisée en ce que** R⁴ représente un radical hydrocarboné comprenant 6 à 30, en particulier 11 à 30, atomes de carbone, qui contient le cas échéant des atomes d'oxygène à fonction éther.

6. Composition durcissant sous l'effet de l'humidité, à un composant, selon l'une quelconque des revendications 4 ou 5, **caractérisée en ce que** R⁵
représente un radical alkyle linéaire ou ramifié comprenant 6 à 30, en particulier 11 à 30, atomes de carbone, le cas échéant avec des proportions cycliques et le cas échéant avec au moins un hétéroatome,
ou
un radical hydrocarboné linéaire ou ramifié, monoinsaturé ou polyinsaturé, comprenant 6 à 30 atomes de carbone, en particulier 11 à 30 atomes de carbone,
de préférence un radical C₁₁-alkyle.

7. Composition durcissant sous l'effet de l'humidité, à un composant, selon l'une quelconque des revendications précédentes, **caractérisée en ce que** l'amine **B** est choisie dans le groupe constitué par la 1,6-hexaméthylènediamine, le 1,5-diamino-2-méthylpentane (MPMD), la 1,3-pentanediamine (DAMP), le 1-amino-3-aminométhyl-3,5,5-triméthylcyclohexane (= isophoronediamine ou IPDA), la 2,2,4-triméthylhexaméthylènediamine et la 2,4,4-triméthylhexaméthylènediamine (TMD), 1,3-xylylènediamine le 1,3-bis-(aminométhyl)cyclohexane, le bis-(4-aminocyclohexyl)-méthane, le bis-(4-amino-3-méthylcyclohexyl)-méthane, le 3(4),8(9)-bis-(aminométhyl)-tricyclo[5.2.1.0^{2,6}] décane, le 1,2-diaminocyclohexane, le 1,3-diaminocyclohexane et le 1,4-diaminocyclohexane, le 1,4-diamino-2,2,6-triméthylcyclohexane, la 3,6-dioxaoctane-1,8-diamine, la 4,7-dioxadécane-1,10-diamine, la 4-aminométhyl-1,8-octanediamine, les polyoxyalkylène-polyamines comprenant deux ou trois groupes amino, la 1,3-phénylènediamine et la 1,4-phénylènediamine, la 2,4-toluylènediamine et la 2,6-toluylènediamine, le 4,4'-diaminodiphénylméthane, le 2,4'-diaminodiphénylméthane et le 2,2'-diaminodiphénylméthane, le 3,3'-dichloro-4,4'-diaminodiphénylméthane et les mélanges des polyamines mentionnées.

8. Composition durcissant sous l'effet de l'humidité, à un composant, selon l'une quelconque des revendications précédentes, **caractérisée en ce que** l'organoalcoxysilane **OS** présente au moins un groupement de formule (VI), où a vaut zéro ou 1 et R⁷ représente un radical méthyle.

9. Composition durcissant sous l'effet de l'humidité, à un composant, selon l'une quelconque des revendications précédentes, **caractérisée en ce que** l'organoalcoxysilane **OS** est choisi dans le groupe constitué par le méthacryloxyméthyltriméthoxysilane, le méthacryloxyméthyldiméthoxyméthylsilane, l'isocyanatométhyltriméthoxysilane, l'isocyanatométhyldiméthoxyméthylsilane, le N-(triméthoxysilylméthyl)-O-méthylcarbamate, le N-(diméthoxyméthylsilylméthyl)-O-méthylcarbamate, le N-cyclohexylaminométhyltriméthoxysilane, le N-cyclohexylaminométhyldiméthoxyméthylsilane, le N-phénylaminométhyltriméthoxysilane, le N-phénylaminométhyldiméthoxyméthylsilane et les polymères à fonctionnalité α-silane provenant de la transformation de polyétherpolyols le cas échéant à chaîne allongée avec de l'isocyanatométhyltriméthoxysilane ou de l'isocyanatométhyldiméthoxyméthylsilane ; ainsi que les organoalcoxysilanes à fonctionnalité α correspondants de ce groupe avec des radicaux éthoxy ou lieu des radicaux méthoxy.

10. Composition durcissant sous l'effet de l'humidité, à un composant, selon l'une quelconque des revendications précédentes, **caractérisée en ce que** le polyisocyanate **P** est un polymère de polyuréthane **PUP** présentant des groupes isocyanate aromatiques.

11. Composition durcissant sous l'effet de l'humidité, à un composant, selon l'une quelconque des revendications précédentes, **caractérisée en ce que** la composition contient en outre au moins un catalyseur d'étain **Z** sous forme d'un composé dialkylétain (IV).

12. Composition durcissant sous l'effet de l'humidité, à un composant, selon la revendication 11, **caractérisée en ce que** le catalyseur d'étain **Z** est présent dans la composition en une quantité telle que le rapport entre le nombre d'atomes d'étain du catalyseur d'étain **Z** et le nombre de groupes isocyanate est inférieur à la valeur de 0,005.

13. Procédé pour le collage d'un substrat **S1** avec un substrat **S2** comprenant les étapes
α) application d'une composition durcissant sous l'effet de l'humidité, à un composant, selon l'une quelconque des revendications 1 à 12 sur un substrat **S1 ;**
β) mise en contact de la composition appliquée avec un substrat **S2** pendant le temps ouvert de la composition ; ou
α') application d'une composition durcissant sous l'effet de l'humidité, à un composant, selon l'une quelconque des revendications 1 à 12 sur un substrat **S1** et sur un substrat **S2 ;**
β') mise en contact de la composition appliquée l'une avec l'autre pendant le temps ouvert de la composition ;
le substrat **S2** étant constitué par le même matériau que le substrat **S1** ou par un matériau différent du substrat **S1.**

14. Procédé de bouchage comprenant les étapes
α") application d'une composition durcissant sous l'effet de l'humidité, à un composant, selon l'une quelconque des revendications 1 à 12 entre un substrat **S1** et un substrat **S2,** de manière telle que la composition est en contact avec le substrat **S1** et le substrat **S2 ;** le substrat **S2** étant constitué par le même matériau que le substrat **S1** ou par un matériau différent du substrat **S1.**

15. Composition anisotrope avec une enveloppe principalement élastique et un noyau principalement plastique, obtenue par durcissement d'une composition durcissant sous l'effet de l'humidité, à un composant, selon l'une quelconque des revendications 1 à 12 au moyen de l'humidité de l'air.

16. Composition isotrope obtenue par le durcissement d'une composition durcissant sous l'effet de l'humidité, à un composant, selon l'une quelconque des revendications 1 à 12 au moyen d'eau délayée de manière essentiellement homogène ou d'un composant contenant de l'eau délayé de manière essentiellement homogène.
